(19) Europäisches Patentamt
European Patent Office
Office européen des brevets

(11) EP 3 192 816 B1

(12) # EUROPEAN PATENT SPECIFICATION

(45) Date of publication and mention of the grant of the patent:
**08.01.2020 Bulletin 2020/02**

(21) Application number: **15840155.4**

(22) Date of filing: **10.08.2015**

(51) Int Cl.:
***C08F 2/48*** *(2006.01)* ***B01J 39/20*** *(2006.01)*
***B01J 47/12*** *(2017.01)* ***C08F 220/02*** *(2006.01)*
***C08J 5/22*** *(2006.01)*

(86) International application number:
**PCT/JP2015/072616**

(87) International publication number:
**WO 2016/039059 (17.03.2016 Gazette 2016/11)**

(54) **COMPOSITION FOR FORMING POLYMERIC FUNCTIONAL MEMBRANE, POLYMERIC FUNCTIONAL MEMBRANE AND PRODUCTION PROCESS THEREFOR, SEPARATION MEMBRANE MODULE, AND ION EXCHANGER**

ZUSAMMENSETZUNG ZUR FORMUNG EINER FUNKTIONALEN POLYMERMEMBRAN, FUNKTIONALE POLYMERMEMBRAN UND HERSTELLUNGSVERFAHREN DAFÜR, TRENNMEMBRANMODUL UND IONENTAUSCHER

COMPOSITION POUR LA FORMATION DE MEMBRANE POLYMÈRE FONCTIONNELLE, MEMBRANE POLYMÈRE FONCTIONNELLE ET SON PROCÉDÉ DE FABRICATION, MODULE DE MEMBRANE DE SÉPARATION, ET ÉCHANGEUR D'IONS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.09.2014 JP 2014185064**
**15.01.2015 JP 2015005674**

(43) Date of publication of application:
**19.07.2017 Bulletin 2017/29**

(73) Proprietor: **Fujifilm Corporation**
**Minato-ku**
**Tokyo 106-8620 (JP)**

(72) Inventor: **INOUE Kazuomi**
**Kanagawa 258-8577 (JP)**

(74) Representative: **Hoffmann Eitle**
**Patent- und Rechtsanwälte PartmbB**
**Arabellastraße 30**
**81925 München (DE)**

(56) References cited:
**WO-A1-2015/030071**
**JP-A- 2003 231 720**
**JP-A- 2004 171 994**
**JP-A- 2005 162 829**
**JP-A- 2006 206 671**
**JP-A- 2014 069 156**
**US-A1- 2008 216 942**

EP 3 192 816 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### BACKGROUND OF THE INVENTION

1. Field of the Invention

The present invention relates to a composition for forming a functional polymer membrane, a functional polymer membrane and a method for manufacturing the same, a separation membrane module, and an ion exchange device.

2. Description of the Related Art

A functional polymer membrane is used as an ion-exchange membrane for electrodeionization (EDI), continuous electrodeionization (CEDI), electrodialysis (ED), electrodialysis reversal (EDR), and the like.

EDI is a water treatment process of removing ions from an aqueous liquid by using an ion-exchange membrane and potential for achieving ion transport. Unlike other water purification techniques such as ion exchange used in the related art, EDI does not need to use an acid or a chemical such as sodium hydroxide and can be used for producing ultrapure water. ED and EDR are electrochemical separation processes of removing ions and the like from water and other fluids.

As ion-exchange membranes of the related art, for example, those described in JP2000-119420A and JP2003-82129A are known.

US 2008/0216942 describes the production of a functional membrane wherein resin films are continuously fed to both sides of a porous resin sheet and a polymer precursor is polymerized in a state in which the porous resin sheet is sandwiched between the resin films.

### SUMMARY OF THE INVENTION

An object of the present invention is to provide a composition for forming a functional polymer membrane from which a functional polymer membrane having a low volume fraction of pores is obtained, a functional polymer membrane using the composition, a method for manufacturing the functional polymer membrane, and a separation membrane module and an ion exchange device which use the functional polymer membrane.

The aforementioned object of the present invention was achieved by means described in the following items.

<1> A composition for forming a functional polymer membrane, comprising a monomer, which has an anionic functional group with an acid dissociation constant pKa of a, as a component A, a monomer, which has an anionic functional group with an acid dissociation constant pKa of b greater than a, as a component B, and a photopolymerization initiator represented by the following Formula PI-1 or PI-2 as a component C, in which a difference between b and a is equal to or greater than 1.5 and equal to or less than 10, and a ratio between a molar equivalent of the anionic functional group the component A has and a molar equivalent of the anionic functional group the component B has is 90:10 to 50:50.

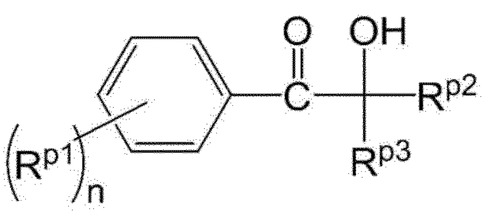

(PI - 1)

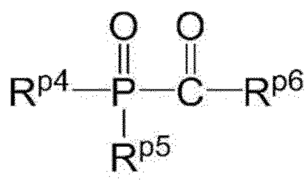

(PI - 2)

In Formula PI-1, $R^{p1}$ represents an alkyl group, an alkenyl group, an alkoxy group, or an aryloxy group, $R^{p2}$ and $R^{p3}$ each independently represent a hydrogen atom, an alkyl group, an alkenyl group, an alkoxy group, or an aryloxy group, $R^{p2}$ and $R^{p3}$ may form a ring by being bonded to each other, and n represents an integer of 0 to 5.

In Formula PI-2, $R^{p4}$ represents an alkyl group, an aryl group, an alkylthio group, or an arylthio group, $R^{p5}$ represents an alkyl group, an aryl group, an alkylthio group, an arylthio group, or an acyl group, and $R^{p6}$ represents an alkyl group or an aryl group, wherein the component A is a monomer having at least one anionic functional group selected from the group consisting of a sulfonic acid group, a phosphonic acid group, and a phosphoric acid group, and the component B is a monomer having a carboxylic acid group.

<2> The composition for forming a functional polymer membrane according to <1>, in which the component A has a (meth)acrylamide group and/or a (meth)acryloyloxy group.

<3> The composition for forming a functional polymer membrane according to <1> or <2>, in which the component B has a (meth)acrylamide group and/or a (meth)acryloyloxy group.

<4> The composition for forming a functional polymer membrane according to any one of <1> to <3>, in which the component A contains a monomer represented by the following Formula I and/or a monomer represented by the following Formula II.

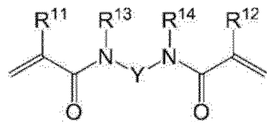

( I )

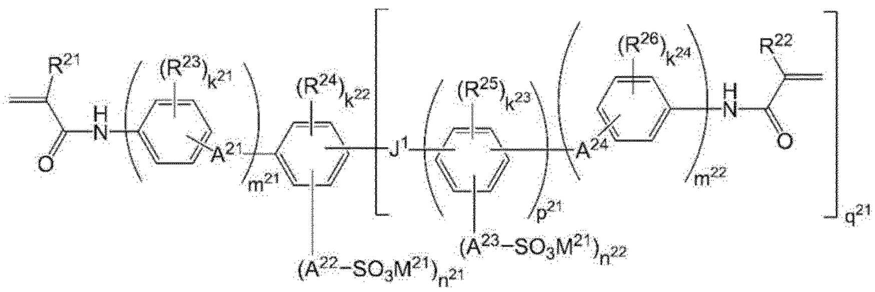

( II )

In Formula I, $R^{11}$ and $R^{12}$ each independently represent a hydrogen atom or a methyl group, $R^{13}$ and $R^{14}$ each independently represent a hydrogen atom or an alkyl group, $R^{13}$ and $R^{14}$ may form a 6- or 7-membered ring together with nitrogen atoms, to which $R^{13}$ and $R^{14}$ are bonded, and Y, Y represents an alkylene group or an arylene group and contains 1 to 4 sulfonic acid groups.

In Formula II, $R^{21}$ and $R^{22}$ each independently represent a hydrogen atom or an alkyl group; $R^{23}$, $R^{24}$, $R^{25}$, and $R^{26}$ each independently represent a substituent; $k^{21}$, $k^{22}$, $k^{23}$, and $k^{24}$ each independently represent an integer of 0 to 4; in a case where there is a plurality of $R^{23}$'s, $R^{24}$'s $R^{25}$'s, and $R^{26}$'s, the plurality of $R^{23}$'s, $R^{24}$'s, $R^{25}$'s, and $R^{26}$'s may be the same as or different from each other and may form a ring by being bonded to each other; $A^{21}$, $A^{22}$, $A^{23}$, and $A^{24}$ each independently represent a single bond or a divalent linking group; $M^{21}$ each independently represents a hydrogen ion, an organic base ion, or a metal ion; $n^{21}$ and $n^{22}$ each independently represent an integer of 1 to 4; $m^{21}$ and $m^{22}$ each independently represent 0 or 1; $J^1$ represents a single bond, -O-, -S-, $-SO_2-$, -CO-, $-CR^{28}R^{29}-$, or an alkenylene group; $R^{28}$ and $R^{29}$ each independently represent a hydrogen atom, an alkyl group, or a halogen atom; $p^{21}$ represents an integer of equal to or greater than 1; and $q^{21}$ represents an integer of 0 to 4.

<5> The composition for forming a functional polymer membrane according to any one of <1> to <4>, in which when a polymer is formed, a main chain-anionic functional group distance of the component A is different from a main chain-anionic functional group distance of the component B, and a difference between the main chain-anionic functional group distance of the component A and the main chain-anionic functional group distance of the component B is equal to or greater than 4.

<6> A functional polymer membrane obtained by polymerizing the composition for forming a functional polymer membrane according to any one of <1> to <5>.

<7> The functional polymer membrane according to <6> that is an ion-exchange membrane.

<8> A method for manufacturing the functional polymer membrane according to <6> or <7>, comprising a step of polymerizing the composition for forming a functional polymer membrane by energy ray irradiation.

<9> A separation membrane module comprising the functional polymer membrane according to <7>.

<10> An ion exchange device comprising the functional polymer membrane according to <7>.

According to the present invention, it is possible to provide a composition for forming a functional polymer membrane from which a functional polymer membrane having a low volume fraction of pores is obtained, a functional polymer membrane using the composition, a method for manufacturing the functional polymer membrane, and a separation membrane module and an ion exchange device which use the functional polymer membrane.

## BRIEF DESCRIPTION OF THE DRAWINGS

Fig. 1 is a schematic view of a flow channel of a device for measuring a water permeability of a membrane.
Figs. 2A to 2D are views illustrating a main chain-anionic functional group distance.

## DESCRIPTION OF THE PREFERRED EMBODIMENTS

Hereinafter, the contents of the present invention will be specifically described. The following constituents will be described based on typical embodiments of the present invention in some cases, but the present invention is not limited to the embodiments. In the present specification, "to" is used to signify that numerical values listed before and after "to" are a lower limit and an upper limit respectively.

In the present specification, in a case where there is no description regarding whether a group (atomic group) is substituted or unsubstituted, the group includes both of a group not having a substituent and a group having a substituent. For example, an "alkyl group" includes not only an alkyl group not having a substituent (unsubstituted alkyl group) but also an alkyl group having a substituent (substituted alkyl group).

In the present specification, some chemical structural formulae will be described as simplified structural formulae in which a hydrogen atom is omitted.

In the present specification, "(meth)acrylate" represents acrylate and methacrylate, "(meth)acryl" represents acryl and methacryl, "(meth)acryloyl" represents acryloyl and methacryloyl, and "(meth)acrylamide" represents acrylamide and methacrylamide.

In the present invention, "% by mass" has the same definition as "% by weight", and "part by mass" has the same definition as "part by weight".

In the present invention, a combination of preferred aspects is a more preferred aspect.

(Composition for forming functional polymer membrane)

A composition for forming a functional polymer membrane of the present invention (hereinafter, simply referred to as a "composition" or a "composition for forming a membrane" as well) contains a monomer, which has an anionic functional group with an acid dissociation constant pKa of a, as a component A, a monomer, which has an anionic functional group with an acid dissociation constant pKa of b greater than a, as a component B, and a photopolymerization initiator represented by the following Formula PI-1 or PI-2 as a component C, in which a difference between b and a is equal to or greater than 1.5 and equal to or less than 10, and a ratio between a molar equivalent of the anionic functional group the component A has and a molar equivalent of the anionic functional group the component B has is 90:10 to 50:50.

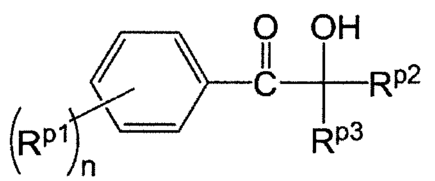

(PI - 1)

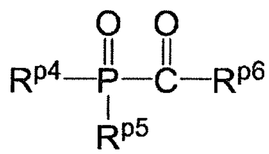

(PI - 2)

In Formula PI-1, $R^{p1}$ represents an alkyl group, an alkenyl group, an alkoxy group, or an aryloxy group, $R^{p2}$ and $R^{p3}$ each independently represent a hydrogen atom, an alkyl group, an alkenyl group, an alkoxy group, or an aryloxy group, $R^{p2}$ and $R^{p3}$ may form a ring by being bonded to each other, and n represents an integer of 0 to 5.

In Formula PI-2, $R^{p4}$ represents an alkyl group, an aryl group, an alkylthio group, or an arylthio group, $R^{p5}$ represents an alkyl group, an aryl group, an alkylthio group, an arylthio group, or an acyl group, and $R^{p6}$ represents an alkyl group or an aryl group.

As a result of conducting intensive investigation, the inventor of the present invention found that, the composition for forming a functional polymer membrane containing the components A to C has excellent photocuring properties, and a functional polymer membrane obtained by photocuring the composition for forming a membrane is suitable as an ion-exchange membrane and has a low volume fraction of pores, a low water permeability, a low electrical resistance, and excellent scaling resistance.

In a case where electrodialysis is performed using an ion-exchange membrane, sometimes precipitates based on calcium ions or magnesium ions that are poorly soluble in water occur. The scaling resistance means a property of inhibiting the occurrence of such precipitates.

Unfortunately, the ion-exchange membranes described in JP2000-119420A and JP2003-82129A have a high water permeability and a high electrical resistance and require great energy for electrodialysis. Furthermore, if thermal curing is used for making a membrane, it takes at least several hours to make the membrane. As a result of conducting

intensive investigation, the inventor of the present invention found that, by making a membrane by photopolymerizing a specific monomer, the time taken for making a membrane can be greatly reduced, and various characteristics described above are improved. The mechanism of action is unclear, but is assumed to be as below.

During thermal curing, it takes a long time to perform curing. Therefore, the components of copolymerization undergo phase separation, and hence a uniform membrane is not easily formed. In contrast, in photocuring, the curing time is short. Accordingly, curing is finished before the components undergo phase separation, and hence a uniform membrane is formed. In a case where thermal polymerization is used, because water or the like used as a solvent volatilizes during curing, and voids occur. However, in the present invention, the occurrence of voids is inhibited.

In a case where a monomer having a small pKa is used singly, due to the electric repulsion of an anionic group, voids occur. If a monomer having a small pKa and a monomer having a great pKa are used in combination, the monomer having a great pKa plays a role of spacer and buries the aforementioned voids, and hence a volume fraction of pores is reduced.

Hereinafter, each of the components constituting the functional polymer membrane of the present invention will be described.

Component A: monomer having anionic functional group with acid dissociation constant pKa of and component B: monomer having anionic functional group with acid dissociation constant pKa of b greater than a

The composition for forming a functional polymer membrane of the present invention contains a monomer, which has an anionic functional group with an acid dissociation constant pKa of a, as a component A, a monomer, which has an anionic functional group with an acid dissociation constant pKa of b greater than a, as a component B, in which a difference between b and a is equal to or greater than 1.5 and equal to or less than 10.

The composition for forming a membrane of the present invention should contain plural kinds of monomers having anionic functional groups. The composition should contain two or more kinds of monomers in which a difference in pKa between the anionic functional groups is equal to or greater than 1.5 and equal to or less than 10, and may contain three or more kinds of monomers in which a difference in pKa between any two monomers is equal to or greater than 1.5 and equal to or less than 10.

The acid dissociation constants of the anionic functional groups the components A and B have are calculated by the following method. Specifically, by using chemical structure drawing software "Marvin sketch" (manufactured by ChemAxon), the structures of the components having the anionic functional groups are drawn, and acid dissociation constants are calculated. When all the structures are selected, and then "pKa" is selected from a "Calculation" menu, the acid dissociation constant of the corresponding component is displayed. As the acid dissociation constant in the present invention, pKa of the portion of structure corresponding to the anionic functional group is used.

A difference between the acid dissociation constant b the component B has and the acid dissociation constant a the component A has (here, $a < b$) is equal to or greater than 1.5 and equal to or less than 10. If the difference between b and a is less than 1.5, the component B does not function as a spacer, a volume fraction of pores increases, and various characteristics deteriorates. It is undesirable that the difference is greater than 10, because then the ion permeability of the membrane decreases, and the electrical resistance markedly increases.

The difference between b and a is preferably 1.5 to 8, more preferably 1.7 to 7, and even more preferably 2 to 6.

In the present invention, among the combinations of monomers satisfying the aforementioned pKa, a combination of a monomer as the component A having at least one anionic functional group selected from the group consisting of a sulfonic acid group, a phosphonic acid group, and a phosphoric acid group and a monomer as the component B having a carboxylic acid group is used, a combination of a monomer as the component A having a sulfonic acid group and/or a phosphonic acid group and a monomer as the component B having a carboxylic acid group is more preferable, and a combination of a monomer as the component A having a sulfonic acid group and a monomer as the component B having a carboxylic acid group is even more preferable.

Each of the components A and B is preferably a radically polymerizable monomer, and more preferably a monomer having an ethylenically unsaturated group (ethylenically unsaturated double bond). In the present invention, a monomer means a compound having a molecular weight (in a case where the compound has a molecular weight distribution, a weight-average molecular weight) of equal to or less than 3,000. A molecular weight (in a case where the components A and B have a molecular weight distribution, a weight-average molecular weight) of the components A and B is preferably equal to or less than 2,000, and more preferably equal to or less than 1,000. If the molecular weight of the components A and B is within the above range, excellent curing properties are obtained. In the present invention, in a case where the structural formula is known, a theoretical value is used as the molecular weight. In a case where the structural formula is unclear or the components have a molecular weight distribution, a molecular weight measured by GPC and expressed in terms of standard polystyrene is used.

As each of the components A and B, any monomer can be preferably used without particular limitation, as long as it is a monomer having an anionic functional group and an ethylenically unsaturated group. Each of the components

A and B is preferably any one of a monofunctional monomer having an anionic functional group and a polyfunctional monomer having an anionic functional group. As the ethylenically unsaturated group, a (meth)acryloyloxy group and a (meth)acrylamide group are preferable.

That is, the component A preferably has a (meth)acrylamide group and/or a (meth)acryloyloxy group. Likewise, the component B preferably has a (meth)acrylamide group and/or a (meth)acryloyloxy group.

The monofunctional monomer having an anionic functional group is preferably a compound represented by the following Formula a-1.

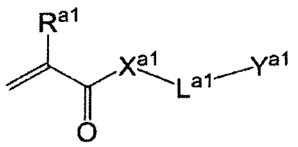

(a - 1)

In Formula a-1, $R^{a1}$ represents a hydrogen atom or an alkyl group, $X^{a1}$ represents an oxygen atom or $NR^{a2}$, $L^{a1}$ represents a divalent organic group, $Y^{a1}$ represents an anionic functional group, and $R^{a2}$ represents a hydrogen atom or an alkyl group.

In Formula a-1, $R^{a1}$ represents a hydrogen atom or an alkyl group. The alkyl group is preferably an alkyl group having 1 to 6 carbon atoms, more preferably an alkyl group having 1 to 4 carbon atoms, even more preferably a methyl group or an ethyl group, and particularly preferably a methyl group. $R^{a1}$ is most preferably a hydrogen atom or a methyl group.

In Formula a-1, $X^{a1}$ represents an oxygen atom or $NR^{a2}$, and $R^{a2}$ represents a hydrogen atom or an alkyl group. The alkyl group is preferably an alkyl group having 1 to 6 carbon atoms, more preferably an alkyl group having 1 to 3 carbon atoms, and even more preferably a methyl group or an ethyl group. $X^{a1}$ is particularly preferably an oxygen atom or NH.

In Formula a-1, $L^{a1}$ represents an divalent organic group, and is preferably an alkylene group or a divalent organic group obtained by combining an alkylene group with at least one group selected from the group consisting of an ether bond, an ester bond, a carbonyl group, an amide bond, a thioether bond, a thioester bond, a thionoester bond, a urethane bond, and a urea bond.

The number of carbon atoms of the alkylene group is preferably 1 to 18, more preferably 1 to 12, even more preferably 1 to 8, and particularly preferably 2 to 6.

The divalent organic group, which is obtained by combining an alkylene group with at least one group selected from the group consisting of an ether bond (-O-), an ester bond (-C(=O)-O-), a carbonyl group (-C(=O)-), an amide bond (-C(=O)-NR-), a thioether bond (-S-), a thioester bond (-C(=O)-S-), a thionoester bond (-C(=S)-O-), a urethane bond (-NR-C(=O)-O-), and a urea bond (-NR-C(=O)-NR-) (herein, R represents a hydrogen atom or an alkyl group having 1 to 6 carbon atoms), is not particularly limited, and is preferably a divalent group obtained by combining an alkylene group with at least one group selected from the group consisting of an ether bond, an ester bond, and an amide bond. The aforementioned divalent group includes a polyalkylene oxyalkylene group obtained by combining a plurality of alkylene groups with a plurality of ether bonds, and the like.

In Formula a-1, $Y^{a1}$ represents an anionic functional group, and specific examples thereof include a carboxylic acid group (a carboxy group, -COOH), a sulfonic acid group (a sulfo group, $-SO_3H$), a phosphonic acid group ($-P(=O)(OH)_2$), a phosphinic acid group (-PH(=O)OH), a phosphoric acid group ($-OP(=O)(OH)_2$), a nitric acid group ($-NO_3$), a carbonic acid group ($-HCO_3$), and a thiol group (-SH). Among these, a sulfonic acid group, a phosphonic acid group, a phosphoric acid group, and a carboxylic acid group are preferable. The component A has at least one anionic functional group selected from the group consisting of a sulfonic acid group, a phosphonic acid group, and a phosphoric acid group, and the component B has a carboxylic acid group. The component A preferably has a sulfonic acid group and/or a phosphonic acid group, and more preferably has a sulfonic acid group.

The aforementioned anionic group may form a salt or form a quaternary ammonium salt, an alkali metal salt, an alkaline earth metal salt, or the like.

Examples of the monomer represented by Formula a-1 will be shown below, but the present invention is not limited to the example compounds. In the following chemical formulae, R represents a hydrogen atom or a methyl group.

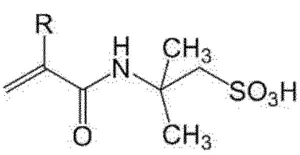

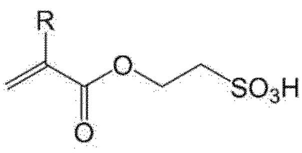

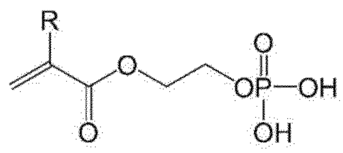

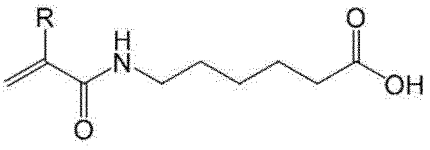
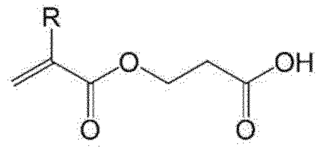

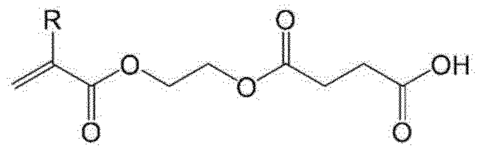

Examples of the component A preferably include a monomer represented by the following Formula I or II.

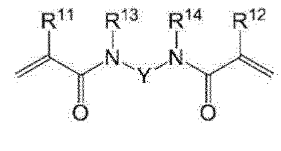
(I)

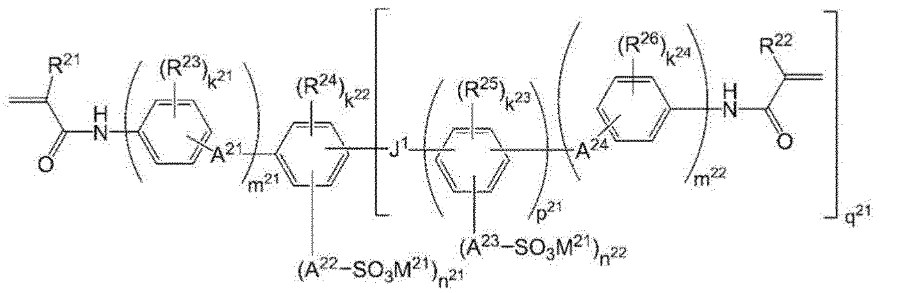
(II)

In Formula I, $R^{11}$ and $R^{12}$ each independently represent a hydrogen atom or a methyl group, $R^{13}$ and $R^{14}$ each independently represent a hydrogen atom or an alkyl group, $R^{13}$ and $R^{14}$ may form a 6- or 7-membered ring together nitrogen atom, to which $R^{13}$ and $R^{14}$ are bonded, and Y, Y represents an alkylene group or an arylene group and contains 1 to 4 sulfonic acid groups.

In Formula II, $R^{21}$ and $R^{22}$ each independently represent a hydrogen atom or an alkyl group; $R^{23}$, $R^{24}$, $R^{25}$, and $R^{26}$ each independently represent a substituent; $k^{21}$, $k^{22}$, $k^{23}$, and $k^{24}$ each independently represent an integer of 0 to 4; in a case where there is a plurality of $R^{23}$'s, $R^{24}$'s, $R^{25}$'s, and $R^{26}$'s, the plurality of $R^{23}$'s, $R^{24}$'s, $R^{25}$'s, and $R^{26}$'s may be the same as or different from each other and may form a ring by being bonded to each other; $A^{21}$, $A^{22}$, $A^{23}$, and $A^{24}$ each independently represent a single bond or a divalent linking group; $M^{21}$ each independently represents a hydrogen ion, an organic base ion, or a metal ion; $n^{21}$ and $n^{22}$ each independently represent an integer of 1 to 4; $m^{21}$ and $m^{22}$ each independently represent 0 or 1; $J^1$ represents a single bond, -O-, -S-, $-SO_2-$, -CO-, $-CR^{28}R^{29}-$, or an alkenylene group; $R^{28}$ and $R^{29}$ each independently represent a hydrogen atom, an alkyl group, or a halogen atom; $p^{21}$ represents an integer of equal to or greater than 1; and $q^{21}$ represents an integer of 0 to 4.

Examples of the polyfunctional monomer having an anionic functional group preferably include the monomer represented by Formula I or II in which $q^{21}$ is equal to or greater than 1.

In Formula I, $R^{11}$ and $R^{12}$ each independently represent a hydrogen atom or a methyl group.

In Formula I, $R^{13}$ and $R^{14}$ each independently represent represents a hydrogen atom or an alkyl group. The alkyl group is preferably an alkyl group having 1 to 8 carbon atoms, and more preferably an alkyl group having 1 to 4 carbon atoms. In a case where $R^{13}$ and $R^{14}$ form a 6- or 7-membered ring together nitrogen atoms, to which $R^{13}$ and $R^{14}$ are bonded, and Y, the formed ring is preferably a piperazine, homopiperazine, or triazine ring which may have a substituent. The above ring may be substituted with sulfonic acid or a salt thereof.

In a case where Y in Formula I is an alkylene group, Y is preferably $C_nH_{2n-m}(SO_3H)_m$ or a salt thereof, n is preferably 3 to 8 and more preferably 3 to 6, and m is preferably 1 to 4. In a case where Y is an arylene group, the arylene group is preferably a phenylene group having 1 to 4 sulfonic acid groups as a substituent, and the phenylene group may be further substituted with an alkylene group having 1 to 4 carbon atoms and the like.

Provided that a molecular weight of the compound represented by Formula I is MW, and the sum of sulfonic acid groups the compound has in a single molecule is ns, it is preferable that the following expression is satisfied.

$$MW < (300 + 300 \times ns)$$

Specific examples of the compound represented by Formula I will be shown below, but the present invention is not limited to the specific examples.

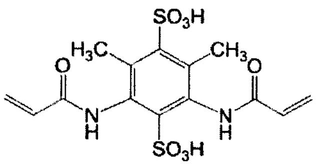
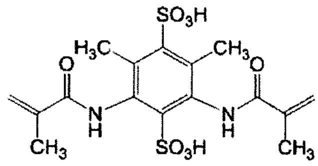
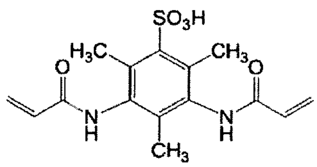

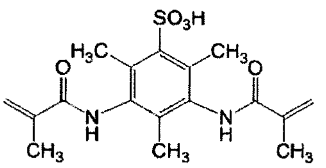
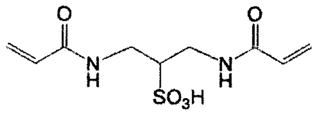
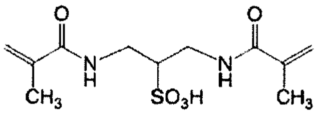

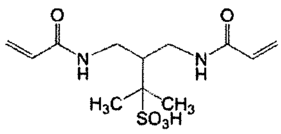
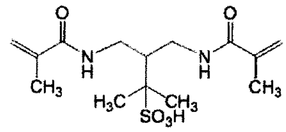
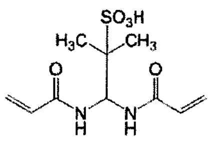
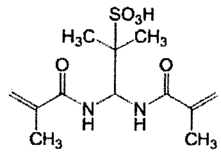

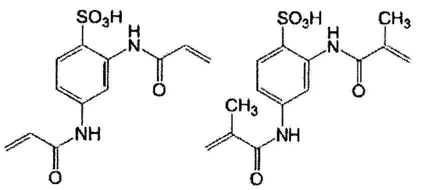
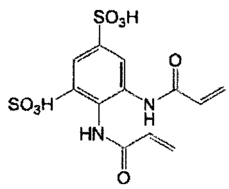
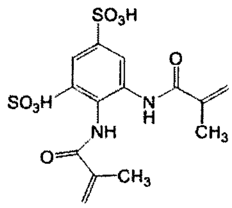

In Formula II, $R^{21}$ and $R^{22}$ each independently represent a hydrogen atom or an alkyl group. The alkyl group is preferably an alkyl group having 1 to 4 carbon atoms, more preferably a methyl group or an ethyl group, and even more preferably a methyl group. Each of $R^{21}$ and $R^{22}$ is particularly preferably a hydrogen atom or a methyl group.

In Formula II, $R^{23}$, $R^{24}$, $R^{25}$, and $R^{26}$ each independently represent a substituent, and examples of the substituent include an alkyl group (preferably having 1 to 24 carbon atoms, more preferably having 1 to 12 carbon atoms, and even more preferably having 1 to 4 carbon atoms), an aryl group (preferably having 3 to 20 carbon atoms, and more preferably having 6 to 10 carbon atoms), an alkenyl group (preferably having 2 to 20 carbon atoms, more preferably having 2 to 12 carbon atoms, and even more preferably having 2 to 4 carbon atoms), an alkynyl group (preferably having 2 to 20 carbon atoms, more preferably having 2 to 12 carbon atoms, and even more preferably having 2 to 4 carbon atoms), an alkoxy group (preferably having 1 to 24 carbon atoms, more preferably having 1 to 12 carbon atoms, and even more preferably having 1 to 4 carbon atoms), an aryloxy group (preferably having 3 to 20 carbon atoms, and more preferably having 6 to 10 carbon atoms), a halogen atom, an acyl group (preferably having 2 to 20 carbon atoms, more preferably having 2 to 12 carbon atoms, and even more preferably having 2 to 4 carbon atoms), an acyloxy group (preferably having 2 to 20 carbon atoms, more preferably having 2 to 12 carbon atoms, and even more preferably having 2 to 4 carbon atoms), and a cyano group. The aforementioned alkyl group may be linear, branched, or cyclic. The aforementioned aryl group may be a heteroaryl group containing N, O, or S as a heteroatom. The above substituents may be further substituted with the above substituents.

$k^{21}$, $k^{22}$, $k^{23}$, and $k^{24}$ each represent an integer of 0 to 4. Each of these is preferably 0 or 1, and more preferably 0.

$A^{21}$, $A^{22}$, $A^{23}$, and $A^{24}$ each independently represent a single bond or a divalent linking group. Examples of the divalent linking group include a linear, branched, or cyclic alkylene group (preferably having 1 to 30 carbon atoms, more preferably having 1 to 12 carbon atoms, and even more preferably having 1 to 4 carbon atoms; examples thereof include methylene, ethylene, propylene, butylene, pentylene, hexylene, octylene, and decylene; in a case where the alkylene group is a cyclic alkylene group, that is, a cycloalkylene group, the cycloalkylene group preferably has 3 to 12 carbon

atoms, more preferably has 3 to 8 carbon atoms, and even more preferably has 3 to 6 carbon atoms), a linear, branched, or cyclic alkynylene group (preferably having 2 to 30 carbon atoms, more preferably having 2 to 12 carbon atoms, and even more preferably having 2 to 4 carbon atoms; examples thereof include ethenylene and propenylene; a cyclic alkenylene group is preferably a 5- or 6-membered cycloalkenylene group), an alkyleneoxy group (preferably having 1 to 30 carbon atoms, more preferably having 1 to 12 carbon atoms, and even more preferably having 1 to 4 carbon atoms; examples thereof include methyleneoxy, ethyleneoxy, propyleneoxy, butyleneoxy, pentyleneoxy, hexyleneoxy, octyleneoxy, and decyleneoxy), an aralkylene group (preferably having 7 to 30 carbon atoms, and more preferably having 7 to 13 carbon atoms; examples thereof include benzylidene and cinnamylidene), an arylene group (preferably having 6 to 30 carbon atoms, and more preferably having 6 to 15 carbon atoms; examples thereof include phenylene, cumenylene, mesitylene, tolylene, and xylylene), an ether group (-O-), a thioether group (-S-), a sulfonyl group ($-SO_2-$), and a carbonyl group (-C(=O)-). These may further have a substituent, and as the substituent, a hydroxy group or a halogen atom is preferable.

$M^{21}$ each independently represents a hydrogen ion, an organic base ion, or a metal ion. Examples of the organic base ion include organic base ions selected from an ammonium ion (for example, ammonium, methyl ammonium, dimethyl ammonium, trimethyl ammonium, diethyl ammonium, triethyl ammonium, or dibenzyl ammonium) and an organic heterocyclic ion (preferably a nitrogen-containing heterocyclic ion; the heterocyclic ring in the nitrogen-containing heterocyclic ion is preferably 5- or 6-membered ring and may be an aromatic ring or may be simply a heterocyclic ring; the heterocyclic ring may be fused with other rings such as a benzene ring or may form a spiro ring or a cross-linked ring; examples thereof include pyridinium, N-methylimidazolium, N-methylmorpholinium, 1,8-diazabicyclo[5.4.0]-7-undecanium, 1,8-diazabicyclo[4.3.0]-7-nonenium, and guanidium). Examples of the metal ion include metal ions selected from an alkali metal ion (for example, a lithium ion, a sodium ion, or a potassium ion) and an alkaline earth metal ion (for example, a beryllium ion, a magnesium ion, or a calcium ion), and among these, an alkali metal ion is preferable. In a case where there is a plurality of $M^{21}$'s, the plurality of $M^{21}$'s may be the same as or different from each other.

$M^{21}$ is preferably a hydrogen ion, an organic base ion, or an alkali metal ion, more preferably a hydrogen ion, an organic heterocyclic ion, a lithium ion, a sodium ion, or a potassium ion, even more preferably a hydrogen ion, pyridinium, N-alkylmorpholinium (preferably N-methylmorpholinium), or N-alkylimidazolium (preferably N-methylimidazolium), and particularly preferably a lithium ion or a sodium ion.

$n^{21}$ and $n^{22}$ each independently represent an integer of 1 to 4, and $m^{21}$ and $m^{22}$ each represent 0 or 1.

$n^{21}$ and $n^{22}$ preferably each independently represent 1 to 3, more preferably each independently represent I or 2, and particularly preferably each independently represent 1. $m^{21}$ and $m^{22}$ each represent 0 or 1, and preferably each represent 0.

$J^1$ represents a single bond, -O-, -S-, $-SO_2-$, -CO-, $-CR^{28}R^{29}-$, or an alkenylene group. $R^{28}$ and $R^{29}$ each independently represent a hydrogen atom, an alkyl group, or a halogen atom.

$J^1$ is preferably a single bond, -O-, $-SO_2-$, -CO-, $-CR^{28}R^{29}-$, or an alkenylene group (preferably an ethylene group), more preferably a single bond, $-SO_2-$, $-CR^{28}R^{29}-$, or an alkenylene group, and particularly preferably a single bond.

$R^{28}$ and $R^{29}$ preferably each independently represent an alkyl group or a halogen atom, and more preferably each independently represent a methyl group or a fluorine atom.

$p^{21}$ represents an integer of equal to or greater than 1. $p^{21}$ is preferably 1 to 5, more preferably 1 to 3, and particularly preferably 1. $q^{21}$ represents an integer of 0 to 4. $q^{21}$ is preferably 0 to 3, more preferably 0 to 2, even more preferably 0 or 1, and particularly preferably 1.

The monomer represented by Formula II is preferably a monomer represented by the following Formula III.

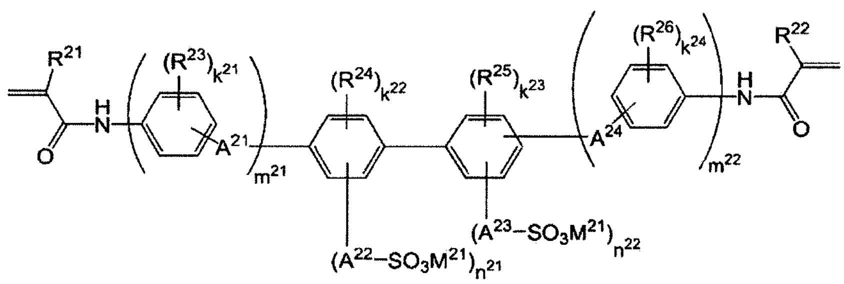

(III)

In Formula III, $R^{21}$, $R^{22}$, $R^{23}$, $R^{24}$, $R^{25}$, $R^{26}$, $k^{21}$, $k^{22}$, $k^{23}$, $k^{24}$, $A^{21}$, $A^{22}$, $A^{23}$, $A^{24}$, $M^{21}$, $m^{21}$, $m^{22}$, $n^{21}$, and $n^{22}$ have the same definition as $R^{21}$, $R^{22}$, $R^{23}$, $R^{24}$, $R^{25}$, $R^{26}$, $k^{21}$, $k^{22}$, $k^{23}$, $k^{24}$, $A^{21}$, $A^{22}$, $A^{23}$, $A^{24}$, $M^{21}$, $m^{21}$, $m^{22}$, $n^{21}$, and $n^{22}$ in Formula II respectively, and preferred ranges thereof are also the same.

Specific examples of the compound represented by Formula II will be shown below, but the present invention is not limited to the specific examples. M-1 to M-10 shown below are monofunctional monomers, and M-11 to M-22 are polyfunctional monomers.

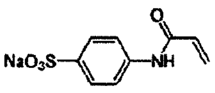

M-1

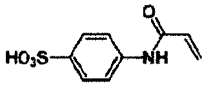

M-2

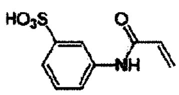

M-3

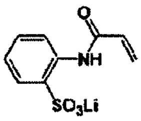

M-4

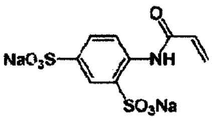

M-5

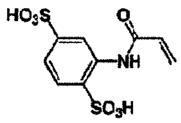

M-6

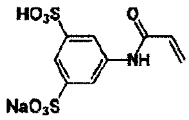

M-7

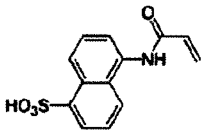

M-8

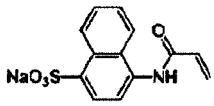

M-9

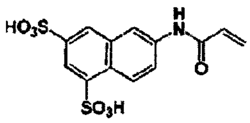

M-10

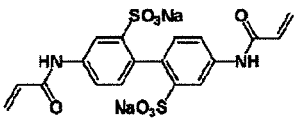

M-11

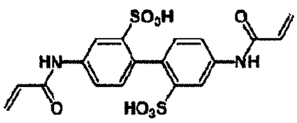

M-12

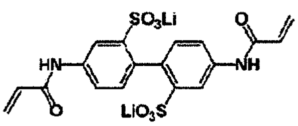

M-13

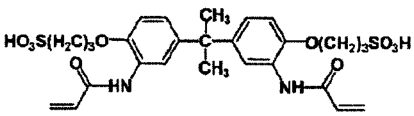

M-16

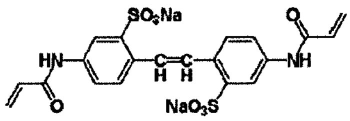

M-17

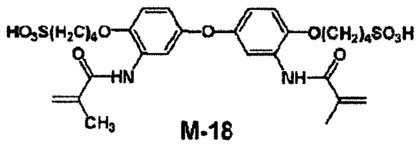

M-18

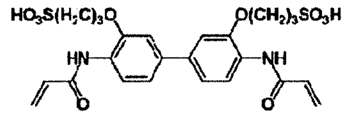
M-14

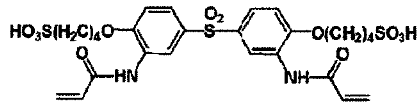
M-19

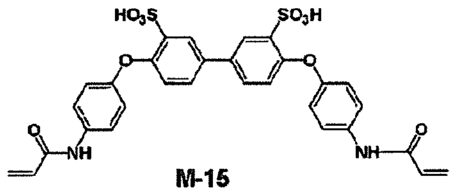
M-15

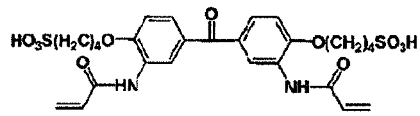
M-20

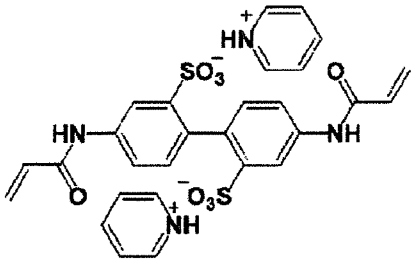
M-21

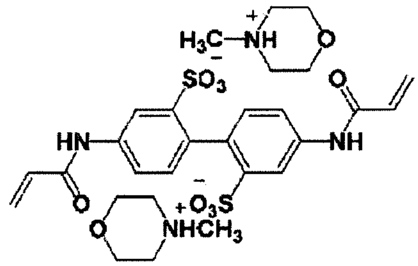
M-22

As the component B, a carboxyl group-containing monofunctional monomer may be used, and for example, an unsaturated fatty acid may be used. Examples thereof include acrylic acid, methacrylic acid, itaconic acid, maleic acid, fumaric acid, crotonic acid, isocrotonic acid, and the like.

In the present invention, it is preferable that at least one compound selected from the group consisting of the component A, the component B, and other polymerizable compounds is a polyfunctional polymerizable compound. It is more preferable that the composition for forming a membrane contains a polyfunctional polymerizable monomer as the component A. It is preferable to use a polyfunctional polymerizable compound, because then a cross-link is introduced into the functional polymer membrane, and a volume fraction of pores is reduced.

A content of the polyfunctional polymerizable compound is, with respect to a total solid content of the composition for forming a membrane, preferably 10% to 90% by mass, more preferably 20% to 85% by mass, and even more preferably 30% to 80% by mass.

A content of the polyfunctional polymerizable compound with respect to a total mass of the polymerizable compound is preferably 10% to 95% by mass, more preferably 20% to 90% by mass, and even more preferably 30% to 85% by mass.

If the content of the polyfunctional polymerizable compound is within the above range, an appropriate cross-link is formed in the obtained functional polymer membrane.

In the present invention, one kind of component A and one kind of component B may be used singly, or two or more kinds of component A and two or more kinds of component B may be used in combination.

A ratio between a molar equivalent of the anionic functional group the component A has and a molar equivalent of the anionic functional group the component B has is 90:10 to 50:50. If the content ratio is within the above range, an ion exchange ability becomes excellent, and a low volume fraction of pores is obtained.

The ratio between a molar equivalent of the anionic functional group the component A has and a molar equivalent of the anionic functional group the component B has is preferably 85:15 to 60:40, and more preferably 85:15 to 70:30.

A content of the component A is, with respect to a total solid content of the composition for forming a membrane of the present invention, preferably 40% to 90% by mass, more preferably 50% to 85% by mass, and even more preferably 55% to 80% by mass. It is preferable that the content of the component A is within the above range, because then excellent ion exchange properties are obtained.

A content of the component B is, with respect to a total solid content of the composition for forming a membrane of the present invention, preferably 3% to 50% by mass, more preferably 5% to 45% by mass, and even more preferably 10% to 30% by mass. It is preferable that the content of the component B is within the above range, because then a functional polymer membrane having a low volume fraction of pores is obtained.

In the present invention, a total content of polymerizable compounds including other polymerizable compounds which will be described later is, with respect to a total solid content of the composition for forming a membrane, preferably 80% to 99% by mass, more preferably 85% to 98% by mass, and even more preferably 90% to 97% by mass.

(Main chain-anionic functional group distance)

In the present invention, it is preferable that there is a difference between a main chain-anionic functional group distance of the component A and a main chain-anionic functional group distance of the component B, and the difference is more preferably equal to or greater than 4.

Herein, the main chain-anionic functional group distance means the number of atoms from the main chain, which is established when a polymer is formed, to the anionic functional group. The atoms of N, O, C and the like are regarded as being the same as each other, and the number of these atoms is counted. Furthermore, atoms constituting the anionic functional group, such as C of a carboxyl group and S of a sulfo group, are not counted.

Figs. 2A to 2D are views illustrating the main chain-anionic functional group distance.

In Fig. 2A, the main chain-anionic functional group distance is the number of atoms from a carbon atom having an ethylenically unsaturated double bond forming the main chain, which is established when a polymer is formed, to the anionic functional group. In MN-1, the number of atoms indicated with circles is counted, and the thus obtained main chain-anionic functional group distance is 4. Likewise, in Fig. 2B, a main chain-anionic functional group distance in MN-2 is 4.

CL-1 in Fig. 2C is a bifunctional polymerizable compound, and when a polymer is formed, two ethylenically unsaturated bonds and a portion therebetween form a main chain. Accordingly, as the atom indicated by a circle shows, the main chain-anionic functional group distance is 1.

CL-2 in Fig. 2D is a bifunctional polymerizable compound just like the compound shown in Fig. 2C, and when a polymer is formed, two ethylenically unsaturated bonds and a portion therebetween form a main chain. In CL-2, an anionic functional group is directly bonded to the main chain, and hence the main chain-anionic functional group distance is 0.

In a case where plural kinds of compounds are used as the component A or B, as the main chain-anionic functional group distance, a value obtained by calculating the average of number of atoms based on an equivalent of the anionic functional group is used. That is, the number of the main chain-anionic functional group distance is the average of the main chain-anionic functional group distances.

Specifically, in a case where 0.1 mol of MN-1 and 0.2 mol of CL-1 are used as the component A, a main chain-anionic functional group distance L of component A is calculated as below.

$$L = \{(\text{main chain-anionic group distance of MN-1}) \times 0.1 + (\text{main chain-anionic group distance of CL-1}) \times 0.2\} \div (0.1 + 0.2) = (4 \times 0.1 + 1 \times 0.2) \div (0.1 + 0.2) = 2$$

Accordingly, in the above case, the main chain-ionic group distance L equals 2.

Furthermore, in a case where 0.1 mol of MN-1 described above and 0.2 mol of CL-2 are used as the component A, the main chain-anionic functional group distance L of the component A is calculated as below.

$$L = \{(\text{main chain-anionic group distance of MN-1}) \times 0.1 + (\text{main chain-anionic group distance of CL-2}) \times 0.2 \times 2\ (\text{equivalent/mol})\} \div (0.1 + 0.2 \times 2) = (4 \times 0.1) \div (0.1 + 0.4) = 0.8$$

Accordingly, in the above case, the main chain-ionic group distance L equals 0.8.

As described above, a difference between the main chain-anionic functional group distance of the component A and the main chain-anionic functional group distance of the component B is preferably equal to or greater than 4. Presumably, by combining monomers whose side chains to which the anionic functional group is bonded have different lengths, the formed polymer may have a comb-like structure, and hence voids in the membrane may be reduced. Particularly, presumably, if the difference between the main chain-anionic functional group distance of the component A and the main chain-anionic functional group distance of the component B is equal to or greater than 4, the aforementioned effect may become strong. Presumably, as a result, both of the effect obtained by using monomers with different acidities and the effect of further reducing voids by the comb-like structure may be exhibited, and hence a functional polymer membrane having better transparency and scaling resistance may be obtained.

The difference between the main chain-anionic functional group distance of the component A and the main

chain-anionic functional group distance of the component B is preferably equal to or greater than 4, more preferably 4 to 15, and even more preferably 6 to 15.

It is preferable that the difference between the main chain-anionic functional group distance of the component A and the main chain-anionic functional group distance of the component B is equal to or less than 15, because then the molecular weights of the monomers become appropriate, a decrease in a charge density of the entire membrane is inhibited, and an increase in a membrane resistance is inhibited.

From the viewpoint of ease of availability of the compound, it is preferable that the main chain-anionic functional group distance of the component B is greater than the main chain-anionic functional group distance of the component A.

Component C: photopolymerization initiator represented by Formula PI-1 or PI-2

The composition of the present invention contains a photopolymerization initiator represented by Formula PI-1 and/or a photopolymerization initiator represented by Formula PI-2.

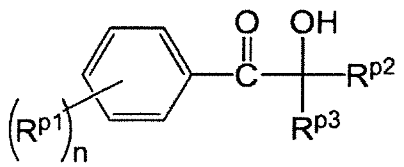

( PI - 1 )

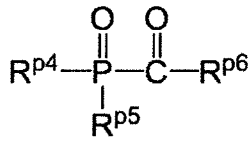

( PI - 2 )

In Formula PI-1, $R^{p1}$ represents an alkyl group, an alkenyl group, an alkoxy group, or an aryloxy group, $R^{p2}$ and $R^{p3}$ each independently represent a hydrogen atom, an alkyl group, an alkenyl group, an alkoxy group, or an aryloxy group, $R^{p2}$ and $R^{p3}$ may form a ring by being bonded to each other, and n represents an integer of 0 to 5.

In Formula PI-2, $R^{p4}$ represents an alkyl group, an aryl group, an alkylthio group, or an arylthio group, $R^{p5}$ represents an alkyl group, an aryl group, an alkylthio group, an arylthio group, or an acyl group, and $R^{p6}$ represents an alkyl group or an aryl group.

$R^{p1}$ is preferably an alkyl group having 1 to 18 carbon atoms, an alkenyl group having 2 to 10 carbon atoms, an alkoxy group having 1 to 10 carbon atoms, or an aryloxy group having 6 to 12 carbon atoms. The alkyl group, alkenyl group, alkoxy group, and aryloxy group may have a substituent. The substituent is not particularly limited, and examples thereof include an alkyl group, an aryl group, an alkoxy group, an aryloxy group, an acyl group, an acyloxy group, a hydroxy group, and the like.

The aryl group of the aryloxy group is preferably a phenyl group.

$R^{p1}$ is more preferably an alkyl group having 1 to 4 carbon atoms or an alkoxy group having 1 to 4 carbon atoms. In a case where $R^{p1}$ is an alkoxy group, a methoxy group and a 2-hydroxyethoxy group are preferable. In a case where $R^{p1}$ is an alkyl group, a methyl group substituted with a phenyl group is preferable, and the molecule of the phenyl group preferably forms a methylenebis substance as a whole by the substitution of $-C(=O)-C(R^{p2})(R^{p3})(OH)$.

$R^{p2}$ and $R^{p3}$ preferably each independently represent an alkyl group, an alkenyl group, an alkoxy group, or an aryloxy group, more preferably each independently represent an alkyl group having 1 to 8 carbon atoms, an alkenyl group having 2 to 8 carbon atoms, an alkoxy group having 1 to 8 carbon atoms, or an aryloxy group having 6 to 10 carbon atoms, even more preferably each independently represent an alkyl group, and particularly preferably each independently represent methyl. The alkyl group, alkenyl group, alkoxy group, and aryloxy group may have a substituent. The substituent is not particularly limited, and examples thereof include an alkyl group, an aryl group, an alkoxy group, an aryloxy group, an acyl group, an acyloxy group, a hydroxy group, and the like.

The ring formed by the bonding between $R^{p2}$ and $R^{p3}$ is preferably a 5- or 6-membered ring, and more preferably a cyclopentane ring or a cyclohexane ring.

In Formula PI-2, the alkyl group in $R^{p4}$ to $R^{p6}$ is preferably an alkyl group having 1 to 8 carbon atoms, and the aryl group in $R^{p4}$ to $R^{p6}$ is preferably an aryl group having 6 to 16 carbon atoms. The aryl group may have a substituent, and the substituent is not particularly limited. Examples of the substituent include an alkyl group, an aryl group, an alkoxy group, an aryloxy group, an acyl group, an acyloxy group, a hydroxy group, and the like, and among these, an alkyl group or an alkoxy group is preferable.

The alkylthio group or the arylthio group in $R^{p4}$ and $R^{p5}$ is an alkylthio group having 1 to 12 carbon atoms or an arylthio group having 6 to 12 carbon atoms. The acyl group in $R^{p5}$ is preferably an alkylcarbonyl group or an arylcarbonyl group, and more preferably an alkylcarbonyl group having 2 to 12 carbon atoms or an arylcarbonyl group having 7 to 17 carbon atoms. Among these, an arylcarbonyl group is preferable as $R^{p5}$, and a phenylcarbonyl group which may have a substituent is particularly preferable. The acyl group may have a substituent.

In the present invention, as the component C, from the viewpoint of curing properties, the polymerization initiator

represented by Formula PI-1 is more preferable than the polymerization initiator represented by Formula PI-2.

Specific examples of the polymerization initiator represented by Formula PI-1 or PI-2 will be shown below, but the present invention is not limited thereto.

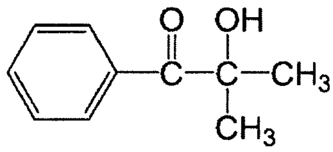

( PI - 1 - 1 )

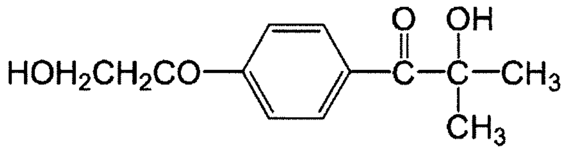

( PI - 1 - 2 )

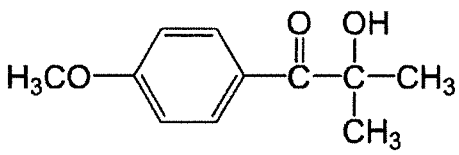

( PI - 1 - 3 )

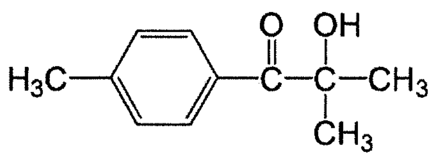

( PI - 1 - 4 )

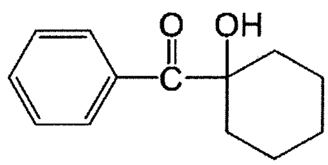

( PI - 1 - 5 )

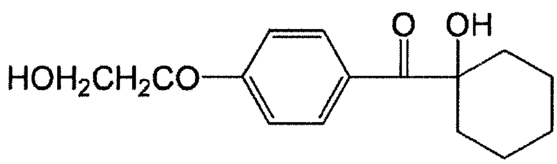

( PI - 1 - 6 )

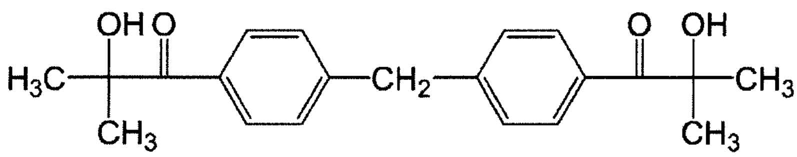

( PI - 1 - 7 )

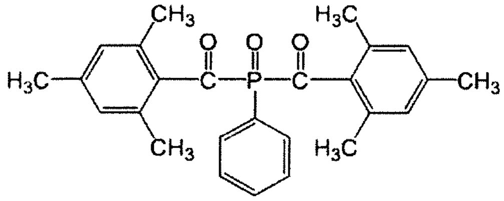

( PI - 2 - 1 )

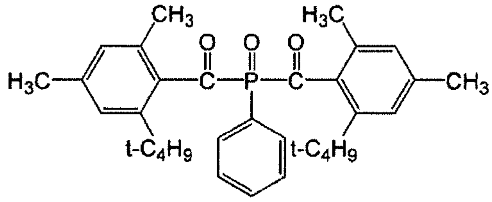

( PI - 2 - 2 )

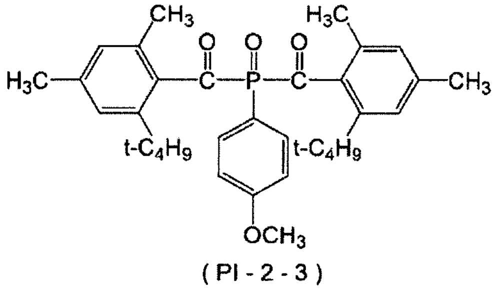

( PI - 2 - 3 )

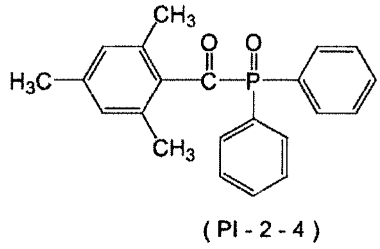

( PI - 2 - 4 )

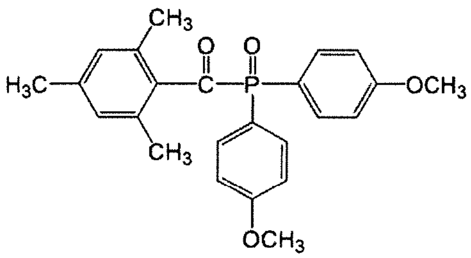

( PI - 2 - 5 )

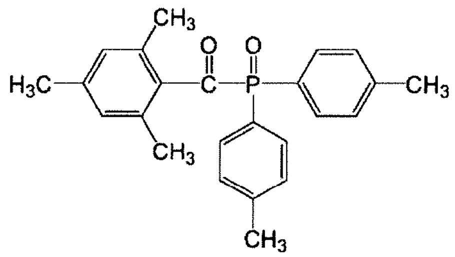

( PI - 2 - 6 )

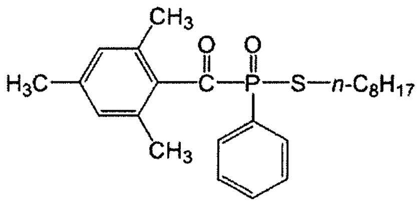

( PI - 2 - 7 )

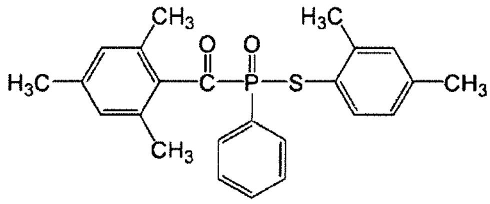

( PI - 2 - 8 )

The photopolymerization initiator represented by Formula PI-1 and the photopolymerization initiator represented by Formula PI-2 are available from BASF Japan Ltd. and the like.

In the present invention, a content of the component C is, with respect to 100 parts by mass as a total solid content of the composition for forming a membrane, preferably 0.1 to 10 parts by mass, more preferably 0.1 to 5 parts by mass, and particularly preferably 0.5 to 3 parts by mass. If the content is within the above range, the curing properties become excellent.

(Other components)

The composition for forming a membrane of the present invention may contain other components in addition to the components A and C described above. Examples of other components include a component D: polymerizable compound other than the components A and B, a component E: a photopolymerization initiator other than the component C, a component F: a co-sensitizer, a component G: a polymerization inhibitor, a component H: a solvent, a component I: an alkali metal compound, and a component J: other components. Each of these will be described below.

Component D: polymerizable compound other than components A and B

The composition for forming a membrane of the present invention may contain, as a component D, a polymerizable compound other than the components A and B. Herein, it is preferable that the component D plays a role of adjusting the hydrophilicity and hydrophobicity as well as the cross-link density of the membrane such that the water permeability of the functional polymer membrane of the present invention or the electrical resistance of the membrane is adjusted.

The aforementioned other polymerizable compounds may be any of monomers, oligomers, and polymers, and are preferably monomers. In the present invention, an oligomer means a compound having a weight-average molecular weight of greater than 3,000 and equal to or less than 10,000, and a polymer means a compound having a weight-average molecular weight of greater than 10,000.

The "other monofunctional polymerizable compounds" are monofunctional polymerizable compounds that do not correspond to the components A and B, and examples of those other monofunctional polymerizable compounds include known monomers such as acrylic acid esters, methacrylic acid esters, acrylamides, methacrylamides, vinyl esters, styrenes, acrylonitrile, and maleic acid imide. The use of these monomers can improve various physical properties such as membrane formability, membrane strength, hydrophilicity, hydrophobicity, solubility, reactivity, and stability. Regarding synthesis methods of the monomers, for example, it is possible to refer to the section of ester synthesis in "The 5th Edition of The Course of Experimental Science 16, The Synthesis of Organic Compound (II-1)" edited by The Chemical Society of Japan or the section of handling and purification of monomers in "The 5th Edition of The Course of Experimental Science 26, Polymer Chemistry", and the like.

Among these, from the viewpoint of the stability and pH resistance of the obtained functional polymer membrane, a compound not having an ester bond, a (meth)acrylamide compound, a vinyl ether compound, an aromatic vinyl compound, an N-vinyl compound (polymerizable monomer having an amide bond), and an allyl compound are preferable,

and a (meth)acrylamide compound is particularly preferable.

Examples of the aforementioned other monofunctional polymerizable compounds include the compounds described in JP2008-208190A or JP2008-266561A.

Specific examples of the aforementioned other monofunctional polymerizable compounds will be shown below, but the present invention is not limited to the specific examples.

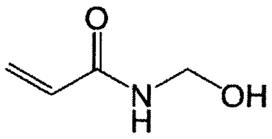
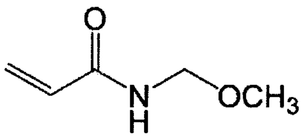
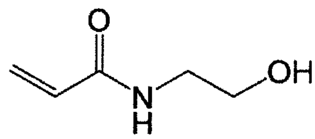

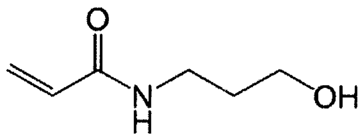
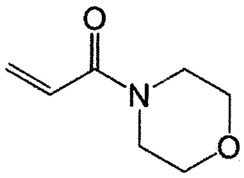
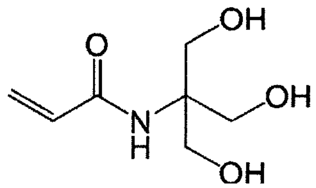

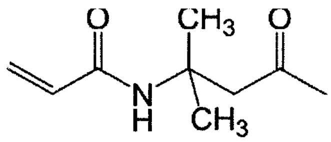
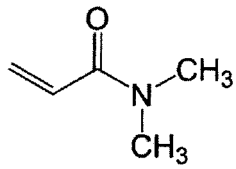

These compounds are marketed by Kohjin Co., Ltd., KYOWA HAKKO CHEMICAL CO., LTD., Fluka, Sigma-Aldrich Co. LLC., TOAGOSEI CO., LTD., and the like, and can be easily synthesized by known methods.

The composition for forming a membrane of the present invention may contain, as the component D, a polyfunctional polymerizable compound having two or more functional groups. The component D is preferably a polyfunctional (meth)acrylamide compound.

Examples of polyfunctional polymerizable compounds preferable as the component D will be shown below, but the present invention is not limited thereto.

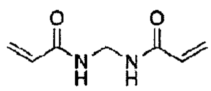
(VII-1)

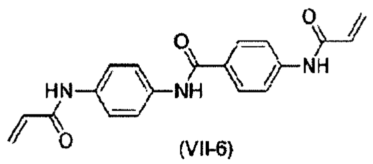
(VII-6)

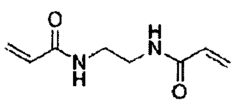
(VII-2)

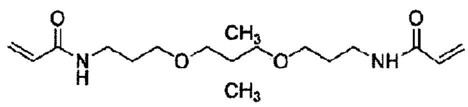
(VII-7)

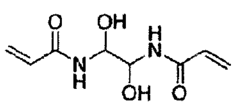
(VII-3)

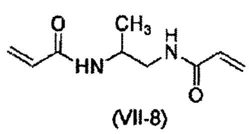
(VII-8)

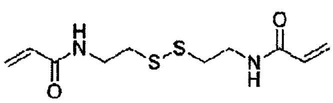
(VII-4)

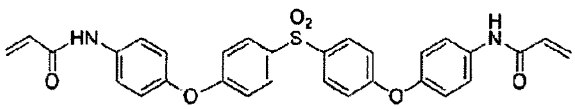
(VII-9)

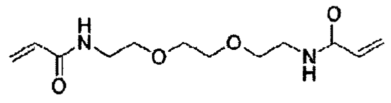

(VII-5)

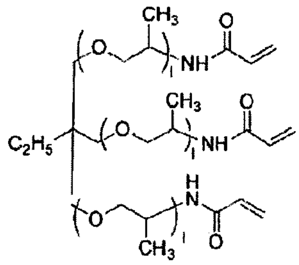

(VII-10)

Herein, 1 in the compound (VII-10) represents an integer of equal to or greater than 1.

From the viewpoint of an ion exchange ability, a content of the component D is preferably smaller than a total content of the components A and B (a content of the component D is preferably less than the content of the components A and B). The content of the component D is preferably equal to or less than 90% and more preferably equal to or less than 75% of the total content of the components A and B.

Component E: photopolymerization initiator other than component C

The composition for forming a functional polymer membrane of the present invention may contain, as a component E, photopolymerization initiators other than the component C (hereinafter, referred to as other photopolymerization initiators as well) in addition to the component C.

Examples of the photopolymerization initiators include aromatic ketones excluding the compound represented by Formula PI-1, an acylphosphine compound excluding the compound represented by Formula PI-2, an aromatic onium salt compound, an organic peroxide, a thio compound, a hexaarylbiimidazole compound, a ketoxime ester compound, a borate compound, an azinium compound, a metallocene compound, an active ester compound, a compound having a carbon halogen bond, an alkylamine compound, and the like.

Examples of the aromatic ketones, the acylphosphine oxide compound, and the thio compound preferably include compounds having a benzophenone skeleton or a thioxanthone skeleton described in "RADIATION CURING IN POLYMER SCIENCE AND TECHNOLOGY", p. 77 to 117 (1993), and the like, and more preferably include the α-thiobenzophenone compound described in JP1972-6416B (JP-S47-6416B), the benzoin ether compound described in JP1972-3981B (JP-S47-3981B), the α-substituted benzoin compound described in JP1972-22326B (JP-S47-22326B), the benzoin derivative described in JP1972-23664B (JP-S47-23664B), the aroylphosphonic acid ester described in JP1982-30704A (JP-S57-30704A), the dialkoxybenzophenone described in JP1985-26483B (JP-S60-26483B), the benzoin ethers described in JP1985-26403B (JP-S60-26403B) and JP1987-81345A (JP-S62-81345A), the α-aminobenzophenones described in JP1989-34242B (JP-H01-34242B), US4318791A, and EP0284561A1, the p-di(dimethylaminobenzoyl)benzene described in JP1990-211452A (JP-H02-211452A), the thio-substituted aromatic ketone described in JP1986-194062A (JP-S61-194062A), the acylphosphine sulfide described in JP1990-9597B (JP-H02-9597B), the thioxanthones described in JP1988-61950B (JP-S63-61950B), the coumarins described in JP1984-42864B (JP-S59-42864B), and the like. Furthermore, the polymerization initiators described in JP2008-105379A and JP2009-114290A are also preferable. In addition, the polymerization initiators described in "Ultraviolet Curing System", Kiyomi Kato, United Engineering Center, 1989, pp. 65 to 148 and the like can be exemplified.

In the present invention, a water-soluble polymerization initiator is preferably used.

Herein, the water-soluble polymerization initiator means a polymerization initiator having a property of dissolving in an amount of equal to or greater than 0.5% by mass in distilled water at 25°C. The water-soluble photopolymerization initiator more preferably dissolves in an amount of equal to or greater than 1% by mass and particularly preferably dissolves in an amount of equal to or greater than 3% by mass in distilled water at 25°C.

In the present invention, a total content of photopolymerization initiators including other photopolymerization initiators is preferably, with respect to 100 parts by mass as a mass of a total solid content in the composition for forming a functional polymer membrane, preferably 0.1 to 10 parts by mass, more preferably 0.1 to 5 parts by mass, and even more preferably 0.3 to 2 parts by mass.

A content of other photopolymerization initiators is preferably equal to or less than the content of the component C. The content of other photopolymerization initiators is, with respect to the content of the component C, more preferably equal to or less than 75% by mass, even more preferably equal to or less than 50% by mass, particularly preferably equal to or less than 25% by mass, and most preferably equal to or less than 10% by mass.

Component F: co-sensitizer

A known compound, which further improves sensitivity or functions to prevent polymerization from being hindered due to oxygen, may be added as a co-sensitizer to the composition for forming a functional polymer membrane of the present invention.

Examples of the co-sensitizer include amines such as the compounds described in M. R. Sander et al., "Journal of Polymer Society", Vol. 10, p. 3173 (1972), JP1969-20189B (JP-S44-20189B), JP1976-82102A (JP-S51-82102A), JP1977-134692A (JP-S52-134692A), JP1984-138205A (JP-S59-138205A), JP1985-84305A (JP-S60-84305A), JP1987-18537A (JP-S62-18537A), JP1989-33104A (JP-S64-33104A), and Research Disclosure, No. 33825. Specific examples thereof include triethanolamine, p-dimethylaminobenzoic acid ethyl ester, p-formyldimethylaniline, p-methylthiodimethylaniline, and the like.

The examples also include thiols and sulfides such as the thiol compounds described in JP1978-702A (JP-S53-702A), JP1980-500806B (JP-S55-500806B), and JP1993-142772A (JP-H05-142772A) and the disulfide compounds described in JP1981-75643A (JP-S56-75643A). Specific examples thereof include 2-mercaptobenzothiazole, 2-mercaptobenzoxazole, 2-mercaptobenzimidazole, 2-mercapto-4(3H)-quinazoline, β-mercaptonaphthalene, and the like.

The examples also include an amino acid compound (for example, N-phenylglycine), the organic metal compound described in JP1973-42965B (JP-S48-42965B) (for example, tributyl tin acetate), the hydrogen donor described in JP1980-34414B (JP-S55-34414B), the sulfur compound described in JP1994-308727A (JP-H06-308727A) (for example, trithiane), the phosphorus compound described in JP1994-250387A (JP-H06-250387A) (diethyl phosphite or the like), the Si-H and Ge-H compounds described in JP1996-65779A (JP-H08-65779A), and the like.

Component G: polymerization inhibitor

In the present invention, in order to impart stability to a coating solution, the composition for forming a membrane preferably contains a polymerization inhibitor.

As the polymerization inhibitor, known polymerization inhibitors can be used, and examples thereof include a phenol compound, a hydroquinone compound, an amine compound, a mercapto compound, and the like.

Specific examples of the phenol compound include hindered phenol (phenol having a t-butyl group on the ortho-position, and typical examples thereof include 2,6-di-t-butyl-4-methyl phenol) and bisphenol. Specific examples of the hydroquinone compound include monomethyl ether hydroquinone.

One kind of these polymerization inhibitors may be used singly, and two or more kinds thereof may be used in combination.

A content of the polymerization inhibitor is, with respect to 100 parts by mass as a mass of a total solid content in the composition for forming a functional polymer membrane, preferably 0.01 to 5 parts by mass, more preferably 0.01 to I part by mass, and even more preferably 0.01 to 0.5 parts by mass.

Component H: solvent

The composition for forming a functional polymer membrane of the present invention may contain a solvent as a component H. A content of the solvent in the composition for forming a functional polymer membrane is, with respect to the total amount of the composition for forming a functional polymer membrane, preferably 5% to 50% by mass, more preferably 10% to 50% by mass, and even more preferably 10% to 40% by mass.

If the composition contains the solvent, the polymerization and curing reaction proceeds uniformly and smoothly. Furthermore, in a case where a porous support is impregnated with the composition for forming a functional polymer membrane, the impregnation smoothly proceeds.

As the solvent, either or both of water and a solvent having a solubility of equal to or higher than 5% by mass in water are preferably used, and either or both of water and a solvent readily mixed with water are more preferably used. Therefore, water and a solvent selected from water-soluble solvents are preferable, and it is preferable to use water or a water-soluble solvent alone or use a mixture thereof.

As the water-soluble solvent, particularly, an alcohol-based solvent, an ether-based solvent which is an aprotic polar solvent, an amide-based solvent, a ketone-based solvent, a sulfoxide-based solvent, a sulfone-based solvent, a nitrile-based solvent, and an organic phosphorus-based solvent are particularly preferable.

Examples of the alcohol-based solvent include methanol, ethanol, isopropanol, n-butanol, ethylene glycol, propylene glycol, diethylene glycol, dipropylene glycol, and the like. One kind of these can be used singly, or two or more kinds thereof can be used in combination.

As the aprotic polar solvent include dimethyl sulfoxide, dimethyl imidazolidinone, sulfolane, N-methylpyrrolidone, dimethylformamide, acetonitrile, acetone, dioxane, tetramethylurea, hexamethylphosphoramide, hexamethylphosphorotriamide, pyridine, propionitrile, butanone, cyclohexanone, tetrahydrofuran, tetrahydropyran, ethylene glycol diacetate, γ-butyrolactone, and the like are exemplified as preferred solvents. Among these, dimethyl sulfoxide, N-methylpyrrolidone, dimethylformamide, dimethyl imidazolidinone, sulfolane, acetone, acetonitrile, or tetrahydrofuran is preferable. One kind of these can be used singly, or two or more kinds thereof can be used in combination.

Component I: alkali metal compound

The composition for forming a functional polymer membrane of the present invention may contain an alkali metal compound, which is a monomer having an anionic functional group, such that the solubility of the component A and B is improved. As the alkali metal compound, a hydroxide salt, a chloride salt, a nitric acid salt, and the like of lithium, sodium, and potassium are preferable. Among these, a lithium compound is more preferable, and specific examples thereof include lithium hydroxide, lithium chloride, lithium bromide, lithium nitrate, lithium iodide, lithium chlorate, lithium thiocyanate, lithium perchlorate, lithium·tetrafluoroborate, lithium·hexafluorophosphate, and lithium·hexafluoroarsetate.

Herein, it is also preferable to use the alkali metal compound such that the composition for forming a functional polymer membrane and a mixture of solutions of compositions for forming a functional polymer membrane are neutralized.

The alkali metal compound may be a hydrate. One kind of alkali metal compound may be used singly, or two or more kinds thereof may be used in combination.

In a case where the alkali metal compound is added, an amount thereof added is, with respect to 100 parts by mass as a mass of a total solid content of the composition for forming a functional polymer membrane, preferably 0.1 to 20 parts by mass, more preferably 1 to 20 parts by mass, and even more preferably 5 to 20 parts by mass.

Component J: other components

For adjusting physical properties of the membrane, various polymer compounds can be added to the composition for forming a functional polymer membrane of the present invention. As the polymer compounds, it is possible to use an acrylic polymer, a polyurethane resin, a polyamide resin, a polyester resin, an epoxy resin, a phenol resin, a polycarbonate resin, a polyvinyl butyral resin, a polyvinyl formal resin, shellac, a vinyl-based resin, an acrylic resin, a rubber-based resin, waxes, other natural resins, and the like. Two or more kinds of these may be used in combination.

Furthermore, for adjusting physical properties of the solution, a nonionic surfactant, a cationic surfactant, an organic fluoro compound, and the like can also be added.

Specific examples of the surfactant include an anionic surfactant such as alkylbenzene sulfonate, alkylnaphthalene sulfonate, a higher fatty acid salt, sulfonate of a higher fatty acid ester, a sulfuric acid ester salt of higher alcohol ether, sulfonate of higher alcohol ether, alkyl carboxylate of higher alkyl sulfonamide, a nonionic surfactant such as alkyl phosphate, polyoxyethylene alkyl ether, polyoxyethylene alkyl phenyl ether, polyoxyethylene fatty acid ester, sorbitan fatty acid ester, an ethylene oxide adduct of acetylene glycol, ethylene oxide adduct of glycerine, a non-ionic surfactant such as polyoxyethylene sorbitan fatty acid ester, an amphoteric surfactant such as alkyl betaine or amide betaine, a silicon-based surfactant, a fluorine-based surfactant, and the like. The surfactant can be appropriately selected from these, surfactants known in the related art, and derivatives thereof.

Specific examples of a polymer dispersant include polyvinyl pyrrolidone, polyvinyl alcohol, polyvinyl methyl ether, polyethylene oxide, polyethylene glycol, polypropylene glycol, polyacrylamide, and the like. Among these, polyvinyl pyrrolidone is preferably used.

If necessary, the composition may contain, for example, a surfactant, a viscosity enhancer, a surface tension adjuster, and a preservative, in addition to the aforementioned alkali metal compound.

(Functional polymer membrane)

The functional polymer membrane of the present invention is a membrane obtained by polymerizing (curing) the composition for forming a functional polymer membrane of the present invention, and is preferably a membrane obtained by photopolymerization (photocuring).

The functional polymer membrane of the present invention has an anionic functional group and can be used as an electrolyte membrane (ion-exchange membrane). The functional polymer membrane of the present invention can perform the exchange of $Na^+$ as a cation in water containing a salt such as NaCl.

In the present invention, particularly because the composition of the present invention contains the components A to C, UV curability is imparted to the composition. Accordingly, a functional polymer membrane is obtained within a short period of time, and an electrolyte membrane can be prepared at low costs with excellent productivity.

An ideal ion-exchange membrane has a low membrane resistance, a low water permeability, and a high degree of permselectivity (selectivity in exchanging and separating caton/anion). Generally, the higher the charge density per molecular weight of a unit structure, the lower the membrane resistance, and the higher the permselectivity. Furthermore,

the higher the cross-link density, the further the water permeability can be reduced.

<Support>

The functional polymer membrane of the present invention preferably has a support, and more preferably has a porous support.

Examples of the support include a resin film, woven cloth, non-woven cloth, sponge, and the like. Among these, non-woven cloth is preferable.

Examples of the porous support include woven cloth, non-woven cloth, a sponge-like film, a film having fine through holes, and the like.

Examples of materials forming the support include polyolefin (polyethylene, polypropylene, or the like), polyacrylonitrile, polyvinyl chloride, polyester, polyamide, polysulfone, polyether sulfone, polyphenylene sulfone, polyphenylene sulfide, polyimide, polyethermide, polyamide imide, polycarbonate, an acryl resin, cellulose acetate, polyolefin, polyvinylidene fluoride, polytetrafluoroethylene, polyhexafluoropropylene, polychlorotrifluoroethylene, and a copolymer of these.

As commercially available porous supports, those marketed by Japan Vilene Company, Ltd, Freudenberg & Co. KG, Filtration Technologies, LLC, and Sefar AG are exemplified.

It is preferable that the support is hydrophilic. As a technique for making the support hydrophilic, it is possible to use general treatment methods such as a corona treatment, an ozone treatment, a sulfuric acid treatment, and a silane coupling agent treatment.

A thickness of the support is preferably 10 to 500 μm, more preferably 20 to 400 μm, even more preferably 50 to 300 μm, and particularly preferably 80 to 300 μm.

The functional polymer membrane of the present invention is preferably a membrane having a resin, which has constitutional units derived from the components A and B, within the surface and/or the inside of the porous support.

Furthermore, the functional polymer membrane of the present invention is preferably a water-containing membrane, and more preferably a membrane in which the resin, which has constitutional units derived from the components A and B, is in the form of gel containing water.

<Method for manufacturing functional polymer membrane>

It is preferable that the functional polymer membrane of the present invention is formed by coating the aforementioned support with the composition for forming a functional polymer membrane containing at least the components A to C, and irradiating the coated support with energy rays (referred to as actinic radiation as well) such that a polymerization reaction occurs.

As an example of the method for manufacturing a functional polymer membrane of the present invention, a method is exemplified in which a support is coated with the composition for forming a membrane of the present invention, and the coated support is irradiated with actinic radiation such that a membrane is formed.

The conditions for forming the functional polymer membrane of the present invention are not particularly limited. The temperature is preferably -30°C to 100°C, more preferably -10°C to 80°C, and particularly preferably 5°C to 60°C.

In the present invention, a gas such as air or oxygen may be allowed to coexist at the time of forming the membrane. It is preferable that the membrane is formed in an inert gas atmosphere.

The functional polymer membrane of the present invention can be prepared by a batch process (batch method) by using a fixed support. The functional polymer membrane may also be prepared by a continuous process (continuous method) by using a moving support. The support may be in the form of a roll that is continuously rewound. In a case of a continuous method, by loading a support on a belt that is being continuously moved, it is possible to continuously perform a step of continuously coating the support with a coating solution as a composition for forming a functional polymer membrane and a step of forming a membrane by polymerizing and curing the composition. Here, only one of the coating step and the membrane forming step may be continuously performed.

Until the polymerization and curing reaction is finished after the support is impregnated with the composition for forming a functional polymer membrane, a temporary support may also be used in addition to the support (after the polymerization and curing reaction is finished, the membrane is peeled off from the temporary support).

For the temporary support, the permeation of a substance does not need to be considered, and for example, any material including a metal plate such as an aluminum plate can be used as long as the material can be fixed for forming a membrane.

The porous support can be coated with or impregnated with the composition for forming a functional polymer membrane by various methods such as curtain coating, extrusion coating, air knife coating, slide coating, nip roll coating, forward roll coating, reverse roll coating, dip coating, kiss coating, rod bar coating, or spray coating. A plurality of layers can be simultaneously or continuously coated. For simultaneously coating multiple layers, curtain coating, slide coating,

slot die coating, and extrusion coating are preferable.

In the continuous method, the functional polymer membrane is preferably continuously manufactured on a moving support by using the composition for forming a functional polymer membrane, more preferably by using manufacturing unit which includes a coating portion of the composition for forming a functional polymer membrane, an irradiation source for polymerizing and curing the composition for forming a functional polymer membrane, a membrane winding-up portion, and means for moving the support to the irradiation source and the membrane winding-up portion from the coating portion of the composition for forming a functional polymer membrane.

In the present invention, it is preferable that the functional polymer membrane of the present invention is prepared through steps of (i) coating and impregnating a support with a coating solution as the composition for forming a functional polymer membrane or performing at least one of coating and impregnating of the support with the coating solution, (ii) irradiating the composition for forming a functional polymer membrane with light such that a polymerization and curing reaction occurs, and (iii) peeling off the membrane from the support as desired.

<Irradiation of actinic radiation>

In the aforementioned manufacturing unit, the coating portion of the composition for forming a functional polymer membrane can be placed in a position in the upstream of the irradiation source, and the irradiation source is placed in a position in the upstream of a composite membrane winding-up portion. In order for the composition to have fluidity sufficient for coating performed in a high-speed coating machine, a viscosity at 35°C of the composition for forming a functional polymer membrane is preferably less than 4,000 mPa·s, more preferably 1 to 1,000 mPa·s, and most preferably 1 to 500 mPa·s. In a case where a coating method such as slide bead coating is used, the viscosity at 35°C is preferably 1 to 100 mPa·s.

In a high-speed coating machine, coating of the moving support with the composition for forming a functional polymer membrane can be performed at a rate of higher than 15 m/sec and at up to a rate of higher than 400 m/min.

Particularly, in a case where the support is used for improving the mechanical strength of the membrane, before the surface of the support is coated with the composition for forming a functional polymer membrane, for example, in order to improve wettability and adhesion of the support, the support may be subjected to a corona discharge treatment, a glow discharge treatment, a flame treatment, an ultraviolet irradiation treatment, and the like.

During the polymerization and curing reaction, the polymerizable compounds such as the components A and B are polymerized, and hence a polymer is formed. It is preferable that the polymerization and curing reaction is performed by light irradiation under the conditions in which the polymerization and curing occur with rapidity sufficient for forming a membrane within 30 seconds.

The polymerization and curing reaction of the composition for forming a functional polymer membrane is preferably initiated within 60 seconds, more preferably within 15 seconds, particularly preferably within 5 seconds, and most preferably within 3 seconds, after the support is coated with the composition for forming a functional polymer membrane.

During the polymerization and curing reaction, the composition for forming a functional polymer membrane is irradiated with light preferably for less than 10 seconds, more preferably for less than 5 seconds, particularly preferably for less than 3 seconds, and most preferably for less than 2 seconds. In the continuous method, by the speed at which the composition for forming a functional polymer membrane continuously irradiated with light passes through the irradiation beam and moves, the time of the polymerization and curing reaction is determined.

In a case where high-intensity ultraviolet rays (UV light) is used in the polymerization and curing reaction, a significant amount of heat is likely to be generated. Therefore, in order to prevent overheating, a lamp as a light source and the support coated with the composition for forming a functional polymer membrane or at least one of the lamp as a light source and the support coated with the composition for forming a functional polymer membrane is preferably cooled using cooling air. In a case where infrared light (IR light) at a significant dose is radiated together with UV beams, it is preferable to radiate UV light by using an IR reflective quartz plate as a filter.

The actinic radiation is preferably ultraviolet rays. It is preferable that the irradiation wavelength is matched with an absorption wavelength of any photopolymerization initiator contained in the composition for forming a functional polymer membrane. For example, the irradiation wavelength is 400 to 320 nm for UV-A, 320 to 280 nm for UV-B, and 280 to 200 nm for UV-C.

The source of ultraviolet rays include a mercury arc lamp, a carbon arc lamp, a low-pressure mercury lamp, a medium-pressure mercury lamp, a high-pressure mercury lamp, a swirl-flow plasma arc lamp, a metal halide lamp, a xenon lamp, a tungsten lamp, a halogen lamp, a laser, and an ultraviolet light emitting diode. As the source of ultraviolet rays, a medium-pressure or high-pressure mercury vapor type ultraviolet light emitting diode is particularly preferable. In addition, in order to change an emission spectrum of the lamp, an additive such as a metal halide may be present. In many cases, a lamp having emission maximum at 200 to 450 nm is particularly suitable.

An energy output of the irradiation source of the actinic radiation is preferably 20 to 1,000 W/cm, and more preferably 40 to 500 W/cm. However, the energy output may be higher or lower than the above as long as a desired

exposure dose is established. By changing an exposure intensity, a curing degree of the membrane can be adjusted. The exposure dose, which is measured in a range of UV-B described above regarding the aforementioned device by using High Energy UV Radiometer (UV Power PuckTM manufactured by EIT-Instrument Markets, Inc.), is preferably at least equal to or greater than 40 $mJ/cm^2$, more preferably 100 to 2,000 $mJ/cm^2$, and even more preferably 150 to 1,500 $mJ/cm^2$. The exposure time can be freely selected, but is preferably short and most preferably less than 2 seconds.

In a case where the coating rate is high, in order to obtain a necessary exposure dose, a plurality of light sources may be used. In this case, the exposure intensities of the plurality of light sources may be the same as or different from each other.

<Separation membrane module·ion exchange device>

The functional polymer membrane of the present invention is preferably made into a composite membrane combined with a porous support. Furthermore, the functional polymer membrane is preferably made into a separation membrane module using the functional polymer membrane. In addition, by using the functional polymer membrane, the composite membrane, or the functional polymer membrane module of the present invention, it is possible to prepare an ion exchange device having means for ion exchange, deionization, or purification. The functional polymer membrane can also be suitably used as a fuel cell.

The functional polymer membrane of the present invention can be suitably used by being made into a module. Examples of the module include a spiral type, a hollow fiber type, a pleats type, a tubular type, a plate-and-frame type, a stack type, and the like.

The use of the polymer membrane of the present invention is mainly aimed at ion exchange in particular. However, the use of the functional polymer membrane of the present invention is not limited to ion exchange, and the functional polymer membrane is considered to be able to be suitably used as a proton conducting membrane for a fuel cell and for removing a protein and a virus.

Examples

Hereinafter, the present invention will be more specifically explained by describing examples. The materials and an amount and proportion thereof used, a treatment content, a treatment procedure, and the like shown in the following examples can be appropriately changed within a scope that does not depart from the gist of the present invention. Therefore, the scope of the present invention is not limited to the following specific examples. Herein, unless otherwise specified, "part" and "%" are based on mass.

(Calculation of acid dissociation constant pKa)

Acid dissociation constants of the anionic functional groups the components A and B had were calculated by the following method. Specifically, by using chemical structure drawing software "Marvin sketch" (manufactured by ChemAxon), the structures of the components having the anionic functional groups were drawn, and acid dissociation constants were calculated. When all the structures are selected, and then "pKa" is selected from a "Calculation" menu, the acid dissociation constant of the corresponding component is displayed. As the acid dissociation constant in the present invention, pKa of the portion of structure corresponding to the anionic functional group was used.

(Preparation of functional polymer membrane (cation-exchange membrane))

By using a 150 μm wire-wound rod, an aluminum plate was manually coated with each composition composed as shown in the following Tables 1 and 2 at a rate of about 5 m/min, and then non-woven cloth (FO-2223-10 manufactured by Freudenberg & Co. KG, thickness: 100 μm) was loaded on the coating solution, with which the aluminum plate was coated, and impregnated with the coating solution. By using a rod around which a wire was not wound, the surplus coating solution was removed from the non-woven cloth. The temperature of the coating solution at the time of coating was about 25°C (room temperature). By using a UV exposure machine (manufactured by Fusion UV Systems Inc, Light Hammer 10 model, D-bulb, conveyer speed: 1.0 to 8.0 m/min, 100% intensity), a curing and polymerization reaction was caused on the non-woven cloth impregnated with the coating solution (support impregnated with coating solution), thereby preparing a cation-exchange membrane. The exposure amount was 1,000 to 5,000 $J/cm^2$ in the UV-A region. The obtained membrane was peeled off from the aluminum plate and stored for at least 12 hours in a 0.1 M NaCl solution.

In a case where the membrane was prepared by heating (Comparative Examples 5 and 6), the same process as described above was conducted until the step of removing the coating solution was performed, and then the support impregnated with the coating solution was thermally cured by being put into an oven with a temperature of 80°C.

(Evaluation)

<Time required for curing (exposure time)>

The time required for curing was determined as a curing time required for a quantity of a component, which was eluted when the prepared membrane was dipped into water, to become equal to or less than a detection limit in liquid chromatography.

<Volume fraction (%) of pores of membrane>

From an electrical resistance R of the membrane measured in 0.5 M, 0.7 M, 1.5 M, 3.5 M, and 4.5 M NaCl solutions, an electric conductivity A ($S/cm^2$) of the membrane was calculated by the following equation a.

$$A\ (S/cm^2) = 1/R \qquad \text{Equation a}$$

Then, an electric conductivity of each of the NaCl solutions and the membrane thickness were measured, and an electric conductivity B ($S/cm^2$) of each of the NaCl solutions per unit membrane thickness was calculated. A graph was plotted in which the y-axis showed the conductivity A of the membrane, and the x-axis showed the electric conductivity B ($S/cm^2$) of each of the NaCl solutions with different concentrations per unit membrane thickness, and at this time, a y-intercept of an approximation curve (first-order approximation curve of a least-squares method) of the obtained five plots (electrical resistance corresponding to each concentration) was denoted by C, and a volume fraction of pores was calculated by the following equation b. The ion-exchange membrane preferably has a low volume fraction of pores that is preferably equal to or less than 0.6%, more preferably equal to or less than 0.5%, and even more preferably equal to or less than 0.4%.

$$\text{Volume fraction of pores } (A - C)/B \qquad \text{Equation (b)}$$

<Membrane resistance (electrical resistance of membrane) ($\Omega \cdot cm^2$)>

Both surfaces of the membrane impregnated with a 0.5 M aqueous NaCl solution for about 2 hours was wiped with dry filter paper, and the membrane was inserted into a double-chamber cell (effective membrane area: 1 $cm^2$, a Ag/AgCl reference electrode (manufactured by Metrohm AG) was used as an electrode). Both chambers of the double-chamber cell were filled with 100 mL of NaCl at the same concentration, and the double-chamber cell was left in a thermostatic water tank with a temperature of 25°C until equilibrium was established. After the temperature of the solution in the cell exactly became 25°C, an electrical resistance r1 was measured using an alternating current bridge (frequency: 1,000 Hz). The concentration of NaCl for measurement was set to be 0.5 M. Then, the membrane was removed such that the cell contains only the 0.5 M aqueous NaCl solution, an electrical resistance r2 between both of the electrodes was measured, and an electrical resistance r of the membrane was determined by r1 - r2. The smaller the value of the electrical resistance, the more the membrane is preferable as an ion-exchange membrane.

<Water permeability ($mL/(m^2 \cdot Pa \cdot h)$)>

A water permeability of the membrane was measured using a device having a flow channel 10 shown in Fig. 1. In Fig. 1, the reference I represents a membrane, and the references 3 and 4 represent flow channels of a feed solution (pure water) and a draw solution (4 M NaCl) respectively. The arrow indicated by the reference 2 represents the flow of water separated from the feed solution.

400 mL of the feed solution and 400 mL of the draw solution were brought into contact with each other through the membrane (membrane contact area: 18 $cm^2$). Each of the solutions was caused to flow at a flow rate of 0.11 cm/sec by using a peristaltic pump in a direction of the arrow indicated by the reference 5. The speed at which water in the feed solution permeated the draw solution through the membrane was analyzed by measuring a mass of the feed solution and the draw solution in real time, thereby determining a water permeability. The smaller the value of water permeability, the more the membrane is preferable as an ion-exchange membrane. The values shown in the tables are values multiplied by $10^5$. For example, the measurement value of Example 1 is $4.00 \times 10^{-5}$ ($mL/(m^2 \cdot Pa \cdot hr)$).

The smaller the value of the product of the electrical resistance and the water permeability, the higher the performance of the membrane as an ion-exchange membrane. The product of the value of the electrical resistance and

the value of the water permeability (multiplied by $10^5$) was calculated.

<Scaling resistance test>

By combining a cation-exchange membrane of the present invention with a commercially available anion-exchange membrane (AMX, manufactured by ASTOM Corporation), a stack was prepared, and a deionization experiment was performed using an electrodialysis device (ACILYZER ED, manufactured by ASTOM Corporation). A 3% aqueous NaCl solution prepared using tap water was continuously deionized, and the membrane was taken out after 10 days. The membrane was thoroughly washed with water, the surface of the membrane was observed using a microscope, and a membrane in which a precipitate was observed was evaluated to be defective.

<Surface condition after curing>

A visible light (1,000 nm) transmittance of the membrane was measured using a transmittance measurement device M-306 (manufactured by Asahi Spectra Co., Ltd.). A membrane having a visible light transmittance of equal to or greater than 25% was evaluated to be excellent, and a membrane having a visible light transmittance of less than 25% was evaluated to be turbid.

[Table 1]

| Item | Type | Molecular weight | Distance | Example 1 | 2 | 3 | 4 | 5 | 6 | 7 | 8 | 9 | 10 | 11 | 12 | 13 | 14 | 15 | 16 | 17 |
|---|---|---|---|---|---|---|---|---|---|---|---|---|---|---|---|---|---|---|---|---|
| Monofunctional monomer | MN-1 (pKa:-0.86) | 207 | 4 | 20 | 20 | 20 | 10 | - | 20 | 15 | - | 20 | 20 | 20 | 20 | 15 | - | 30 | 30 | 30 |
| | MN-2 (pKa:-1.1) | 194 | 4 | - | - | - | - | - | - | - | - | - | - | - | - | - | - | - | - | - |
| | MN-3 (pKa:1.2) | 210 | 4 | - | - | - | - | - | - | - | 20 | - | - | - | - | - | 20 | - | - | - |
| | MN-4 (pKa:4.5) | 185 | 7 | 12 | 12 | 12 | 20 | 12 | - | - | - | 12 | 12 | 12 | - | - | - | 10 | - | - |
| | MN-5 (pKa:4.1) | 144 | 4 | - | - | - | - | - | 10 | - | 10 | - | - | - | 10 | - | 10 | - | 10 | - |
| | MN-6 (pKa:3.76) | 216 | 8 | - | - | - | - | - | - | 15 | - | - | - | - | - | 15 | - | - | - | 10 |
| Polyfunctional monomer | CL-1 (pKa:-0.82) | 293 | 1 | 40 | 40 | 40 | 40 | 50 | 40 | 40 | 40 | - | - | - | - | - | - | - | - | - |
| | CL-2 (pKa:-0.75) | 496 | 0 | - | - | - | - | - | - | - | - | 30 | 30 | 30 | 30 | 30 | 30 | - | - | - |
| | CL-3 | 154 | 0 | - | - | - | - | - | - | - | - | - | - | - | - | - | - | 25 | 25 | 25 |
| | CL-4 | 308 | 0 | - | - | - | - | - | - | - | - | - | - | - | - | - | - | - | - | - |
| Neutralizer | NaOH | | | 5 | 5 | 5 | 5 | 5 | 5 | 5 | 5 | 5 | 5 | 5 | 5 | 5 | 5 | 5 | 5 | 5 |
| Polymerization inhibitor | MEHQ | | | 0.1 | 0.1 | 0.1 | 0.1 | 0.1 | 0.1 | 0.1 | 0.1 | 0.1 | 0.1 | 0.1 | 0.1 | 0.1 | 0.1 | 0.1 | 0.1 | 0.1 |
| Photopolymerization initiator | Darocur 1173 | | | 0.5 | - | - | 0.5 | 0.5 | 0.5 | 0.5 | 0.5 | 0.5 | - | - | 0.5 | 0.5 | 0.5 | 0.5 | 0.5 | 0.5 |
| | Irgacure 819 dw | | | - | 0.5 | - | - | - | - | - | - | - | 0.5 | - | - | - | - | - | - | - |
| | Lucirin TPO | | | - | - | 0.5 | - | - | - | - | - | - | - | 0.5 | - | - | - | - | - | - |
| | Irgacure OXE01 | | | - | - | - | - | - | - | - | - | - | - | - | - | - | - | - | - | - |
| | Irgacure OXE02 | | | - | - | - | - | - | - | - | - | - | - | - | - | - | - | - | - | - |
| Thermal polymerization initiator | VA-67 | | | - | - | - | - | - | - | - | - | - | - | - | - | - | - | - | - | - |
| Solvent | Pure water | | | 22.4 | 22.4 | 12.4 | 24.4 | 32.4 | 24.4 | 24.4 | 24.4 | 32.4 | 32.4 | 22.4 | 34.4 | 34.4 | 34.4 | 14.4 | 14.4 | 14.4 |
| | IPA | | | - | - | - | - | - | - | - | - | - | - | - | - | - | - | 15 | 15 | 15 |
| | NMP | | | - | - | 10 | - | - | - | - | - | - | - | 10 | - | - | - | - | - | - |
| Total mass | | | | 100 | 100 | 100 | 100 | 100 | 100 | 100 | 100 | 100 | 100 | 100 | 100 | 100 | 100 | 100 | 100 | 100 |
| a:b (molar equivalent ratio) | | | | 78.2: 21.8 | 78.2: 21.8 | 78.2: 21.8 | 63.1: 36.9 | 72.5: 27.5 | 77.1: 22.9 | 75.1: 24.9 | 77.0: 23.0 | 77.0: 23.0 | 77.0: 23.0 | 77.0: 23.0 | 75.8: 24.2 | 73.6: 26.4 | 75.7: 24.3 | 72.8: 27.2 | 67.6: 32.4 | 75.8: 24.2 |
| Main chain-anionic functional | | | | 2.2 | 2.2 | 2.2 | 1.8 | 1.0 | 2.2 | 2.0 | 2.2 | 2.5 | 2.5 | 2.5 | 2.5 | 2.2 | 2.4 | 4.0 | 4.0 | 4.0 |

| | | | | | | | | | | | | | | | | | | | |
|---|---|---|---|---|---|---|---|---|---|---|---|---|---|---|---|---|---|---|---|
| group distance of component A | | | | | | | | | | | | | | | | | | | |
| Main chain-anionic functional group distance of component B | | | 7.0 | 7.0 | 7.0 | 7.0 | 7.0 | 4.0 | 8.0 | 4.0 | 7.0 | 7.0 | 7.0 | 4.0 | 8.0 | 4.0 | 7.0 | 4.0 | 8.0 |
| Difference in main chain-anionic functional group distance between component A and component B | | | 4.8 | 4.8 | 4.8 | 5.2 | 6.0 | 1.8 | 6.0 | 1.8 | 5.2 | 5.2 | 5.2 | 2.2 | 6.5 | 2.2 | 3.0 | 0.0 | 4.0 |
| Evaluation item | Time required for curing (sec) | | 5 | 5 | 5 | 5 | 5 | 5 | 5 | 5 | 5 | 5 | 5 | 5 | 5 | 5 | 5 | 5 | 5 |
| | Membrane resistance $\Omega \cdot cm^2$ | | 2.30 | 2.50 | 2.50 | 3.00 | 3.00 | 2.50 | 2.60 | 2.60 | 1.90 | 2.00 | 2.00 | 1.90 | 2.30 | 2.50 | 2.40 | 2.50 | 2.20 |
| | Water permeability ($\times 10^{-5}$ mL/($Pa \cdot m^2 \cdot h$)) | | 4.00 | 4.50 | 4.30 | 4.00 | 3.30 | 4.10 | 4.10 | 4.00 | 5.30 | 4.90 | 5.00 | 5.40 | 4.60 | 4.20 | 5.50 | 5.20 | 6.00 |
| | (Membrane resistance) × (Water permeability) | | 9.20 | 11.25 | 10.75 | 12.00 | 9.90 | 10.25 | 10.66 | 10.40 | 10.07 | 9.80 | 10.00 | 10.26 | 10.58 | 10.50 | 13.20 | 13.00 | 13.20 |
| | Volume fraction of pores Vpore (%) | | 0.10 | 0.10 | 0.10 | 0.10 | 0.10 | 0.10 | 0.20 | 0.10 | 0.15 | 0.15 | 0.15 | 0.20 | 0.15 | 0.22 | 0.40 | 0.40 | 0.40 |
| | Surface condition after curing | | Excellent | Excellent | Excellent | Excellent | Excellent | Excellent | Excellent | Excellent | Excellent | Excellent | Excellent | Excellent | Excellent | Excellent | Excellent | Excellent | Excellent |
| | Scaling resistance | | Excellent | Excellent | Excellent | Excellent | Excellent | Excellent | Excellent | Excellent | Excellent | Excellent | Excellent | Excellent | Excellent | Excellent | Excellent | Excellent | Excellent |

[Table 2]

| Item | Type | Molecular weight | Distance | Example 18 | Example 19 | Example 20 | Comparative Example 1 | 2 | 3 | 4 | 5 | 6 | 7 | 8 | 9 | 10 | 11 | 12 | 13 | 14 |
|---|---|---|---|---|---|---|---|---|---|---|---|---|---|---|---|---|---|---|---|---|
| Monofunctional monomer | MN-1 (pKa:-0.86) | 207 | 4 | - | - | - | 30 | 30 | 20 | 20 | 20 | 15 | - | - | 40 | 10 | - | - | - | - |
| | MN-2 (pKa:-1.1) | 194 | 4 | 30 | 30 | - | - | - | - | - | - | - | - | - | - | - | - | 10 | 10 | - |
| | MN-3 (pKa:1.2) | 210 | 4 | - | - | 30 | - | - | - | - | - | - | - | - | - | - | - | - | - | - |
| | MN-4 (pKa:4.5) | 185 | 7 | - | - | - | - | - | 12 | 12 | 10 | - | 40 | 40 | - | - | - | - | - | - |
| | MN-5 (pKa:4.1) | 144 | 4 | 10 | - | - | - | - | - | - | - | - | - | - | - | 30 | 40 | 30 | - | - |
| | MN-6 (pKa:3.76) | 216 | 8 | - | 10 | 10 | - | - | - | - | - | 15 | - | - | - | - | - | - | 30 | 40 |
| Polyfunctional monomer | CL-1 (pKa:-0.82) | 293 | 1 | - | - | - | 40 | - | 40 | 40 | 40 | 40 | 30 | - | - | - | - | - | - | - |
| | CL-2 (pKa:-0.75) | 496 | 0 | - | - | - | - | 30 | - | - | - | - | - | 30 | - | - | - | - | - | - |
| | CL-3 | 154 | 0 | - | - | - | - | - | - | - | - | - | - | - | 25 | 25 | 25 | - | - | - |
| | CL-4 | 308 | 0 | 25 | 25 | 25 | - | - | - | - | - | - | - | - | - | - | - | 25 | 25 | 25 |
| Neutralizer | NaOH | | | - | - | - | 5 | 5 | 5 | 5 | 5 | 5 | 5 | 5 | 5 | 5 | 5 | - | - | - |
| Polymerization inhibitor | MEHQ | | | 0.1 | 0.1 | 0.1 | 0.1 | 0.1 | 0.1 | 0.1 | 0.1 | 0.1 | 0.1 | 0.1 | 0.1 | 0.1 | 0.1 | 0.1 | 0.1 | 0.1 |
| Photopolymerization initiator | Darocur 1173 | | | - | - | - | 0.5 | 0.5 | - | - | - | - | 0.5 | 0.5 | 0.5 | 0.5 | 0.5 | - | - | - |
| | Irgacure 819 dw | | | - | - | - | - | - | - | - | - | - | - | - | - | - | - | - | - | - |
| | Lucirin TPO | | | 0.5 | 0.5 | 0.5 | - | - | - | - | - | - | - | - | - | - | - | 0.5 | 0.5 | 0.5 |
| | Irgacure OXE01 | | | - | - | - | - | - | 0.5 | - | - | - | - | - | - | - | - | - | - | - |
| | Irgacure OXE02 | | | - | - | - | - | - | - | 0.5 | - | - | - | - | - | - | - | - | - | - |
| Thermal polymerization initiator | VA-67 | | | - | - | - | - | - | - | - | 0.5 | 0.5 | - | - | - | - | - | - | - | - |

| | | | | | | | | | | | | | | | | | | | |
|---|---|---|---|---|---|---|---|---|---|---|---|---|---|---|---|---|---|---|---|
| Solvent | Pure water | | - | - | - | 24.4 | 34.4 | 22.4 | 22.4 | 24.4 | 24.4 | 24.4 | 24.4 | 14.4 | 14.4 | 14.4 | - | - | - |
| | IPA | | - | - | - | - | - | - | - | - | - | - | - | 15 | 15 | 15 | - | - | - |
| | NMP | | 25 | 25 | 25 | - | - | - | - | - | - | - | - | - | - | - | 25 | 25 | 25 |
| Total mass | | | 100 | 100 | 100 | 100 | 100 | 100 | 100 | 100 | 100 | 100 | 100 | 100 | 100 | 100 | 100 | 100 | 100 |
| a:b (molar equivalent ratio) | | | 69.0: 31.0 | 77.0: 23.0 | 75.5: 24.5 | 100:0 | 100:0 | 78.2: 21.8 | 78.2: 21.8 | 100:0 | 75.1: 24.9 | 32.2: 67.8 | 35.9: 64.1 | 100:0 | 18.8: 81.2 | 0:100 | 19.8: 80.2 | 27.1: 72.9 | 0:100 |
| Main chain-anionic functional group distance of component A | | | 4.0 | 4.0 | 4.0 | 2.5 | 2.8 | 2.2 | 2.2 | 2.2 | 2.0 | 1.0 | 0.0 | 4.0 | 4.0 | - | 4.0 | 4.0 | - |
| Main chain-anionic functional group distance of component B | | | 4.0 | 8.0 | 8.0 | - | - | 7.0 | 7.0 | 7.0 | 8.0 | 7.0 | 7.0 | - | 4.0 | 4.0 | 4.0 | 8.0 | 8.0 |
| Difference in main chain-anionic functional group distance between component A and component B | | | 0.0 | 4.0 | 4.0 | - | - | 4.8 | 4.8 | 4.8 | 6.0 | 6.0 | 7.0 | - | 0.0 | - | 0.0 | 4.0 | - |
| Evaluation item | Time required for curing (sec) | | 5 | 5 | 5 | 5 | 5 | Failed to prepare membrane | Failed to prepare membrane | 7,200 | 7,200 | 5 | 5 | 5 | 5 | 5 | 5 | 5 | 5 |
| | Membrane resistance $\Omega \cdot cm^2$ | | 3.00 | 3.20 | 3.30 | 2.20 | 1.80 | | | 2.30 | 2.00 | 5.00 | 3.80 | 2.30 | 4.00 | 4.50 | 6.00 | 6.40 | 8.00 |
| | Water permeability ($\times 10^{-5}$ mL/(Pa·m$^2$·h)) | | 4.30 | 4.10 | 4.00 | 7.00 | 8.50 | | | 6.50 | 12.00 | 5.00 | 5.30 | 10.00 | 7.00 | 8.00 | 4.00 | 4.20 | 5.30 |
| | (Membrane resistance) × (Water permeability) | | 12.90 | 13.12 | 13.20 | 15.40 | 15.30 | | | 14.95 | 24.00 | 25.00 | 20.14 | 23.00 | 28.00 | 36.00 | 24.00 | 26.88 | 42.40 |
| | Volume fraction of pores Vpore (%) | | 0.20 | 0.20 | 0.20 | 1.10 | 1.00 | | | 1.20 | 1.50 | 0.80 | 1.10 | 3.00 | 2.20 | 2.00 | 0.70 | 0.80 | 0.80 |
| | Surface condition after curing | | Excellent | Excellent | Excellent | Excellent | Excellent | | | Excellent | Turbid | Excellent | Excellent | Excellent | Excellent | Excellent | Excellent | Excellent | Excellent |
| | Scaling resistance | | Excellent | Excellent | Excellent | Defective | Defective | | | Defective | Defective | Defective | Defective | Defective | Defective | Defective | Defective | Defective | Defective |

In Tables 1 and 2, the unit of numerical values in the column of each component of the composition for forming a membrane is part by mass of the active component. Furthermore,"-" in the tables means that the example does not contain the corresponding component. In Tables 1 and 2, the column of "Distance" represents a "main chain-anionic functional group distance".

The details of the compounds or supports used in examples and comparative examples will be shown below.

MN-1: 2-acrylamide-2-methylpropanesulfonic acid (manufactured by TOKYO CHEMICAL INDUSTRY CO., LTD.), molecular weight: 207.25
MN-2: 2-Sulfoethyl methacrylate (manufactured by Polyscience), molecular weight: 194.1
MN-3: Acid phosphoxy ethyl methacrylate (manufactured by Uni-Chemical Co., Ltd.), molecular weight: 210
MN-4: 6-Acrylamidohexanoic acid (manufactured by Wako Pure Chemical Industries, Ltd.), molecular weight: 185.22
MN-5: 2-Carboxyethyl acrylate (manufactured by Sigma-Aldrich Co. LLC.), molecular weight: 144.13
MN-6: 2-(Acryloyloxy)ethyl Hydrogen Succinate (manufactured by TOKYO CHEMICAL INDUSTRY CO., LTD.), molecular weight: 216.19
CL-1: compound having the following structure (synthesized according to the technique described in US4034001), molecular weight: 293
CL-2: compound having the following structure (synthesized according to the following synthesis method), molecular weight: 496

(Synthesis method of CL-2)

288.29 g (3.43 mol) of sodium hydrogen carbonate (manufactured by Wako Pure Chemical Industries, Ltd.) and 1,343 mL of deionized water were put into a 5 L three-neck flask and stirred a room temperature, and at the same time, 268.6 g (0.78 mol) of 4,4'-benzidine-2,2'-disulfonic acid (manufactured by TOKYO CHEMICAL INDUSTRY CO., LTD.) was added thereto little by little. After being stirred for 30 minutes at room temperature, the mixture was ice-cooled and continuously stirred. While the mixture was being ice-cooled, 138.7 mL (1.53 mol) of acryloyl chloride (manufactured by Wako Pure Chemical Industries, Ltd.) was little by little added dropwise thereto such that the internal temperature of the system was kept at a temperature of equal to or lower than 10°C. After the dropwise addition ended, the mixture was stirred for 1 hour while being ice-cooled and then for 3 hours at room temperature. 2,686 mL of isopropyl alcohol was added little by little to the reaction mixture, and the generated insoluble matter was removed by filtration. The obtained filtrate was moved to a 30 L stainless steel bucket and stirred at room temperature, and at the same time, 10,744 mL of isopropyl alcohol was added thereto little by little. The obtained crystals were filtered and then washed with 1,074 mL of a mixed solution of isopropyl alcohol:water (5:1), thereby obtaining 339 g of CL-2 as intended (yield: 87%).

CL-3: N,N'-Methylenebisacrylamide (manufactured by Wako Pure Chemical Industries, Ltd.), molecular weight: 154.17
CL-4: polyethylene glycol (200) diacrylate (manufactured by SHIN-NAKAMURA CHEMICAL CO., LTD.), molecular weight: 308
MEHQ: 4-methoxyphenol (manufactured by TOKYO CHEMICAL INDUSTRY CO., LTD.)
Darocur 1173: 2-hydroxy-2-methyl-1-phenylpropan-1-one (manufactured by BASF SE)
Irgacure 819dw: bis(2,4,6-trimethylbenzoyl)phenylphosphine oxide (active component: 45%), (manufactured by BASF SE)
Lucirin TPO: 2,4,6-trimethylbenzoyldiphenylphosphine oxide (manufactured by BASF SE)
Irgacure OXE01: 1,2-octanedione,1-[4-(phenylthio)-,2-(O-benzoyloxime)]
Irgacure OXE02: ethanone,1-[9-ethyl-6-(2-methylbenzoyl)-9H-carbazol-3-yl]-,1-(0-acetyloxime) (manufactured by BASF SE)
VA-67: the following structure (thermal polymerization initiator) (manufactured by Wako Pure Chemical Industries, Ltd.)

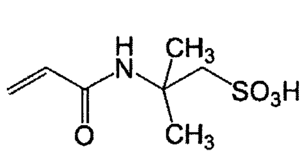
MN - 1

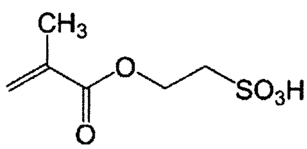
MN - 2

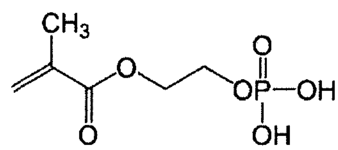
MN - 3

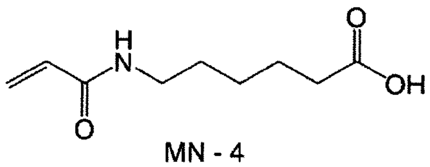

MN - 4

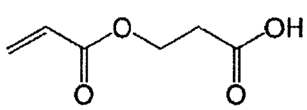

M

N - 5

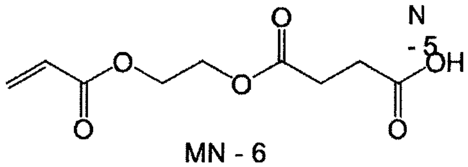

MN - 6

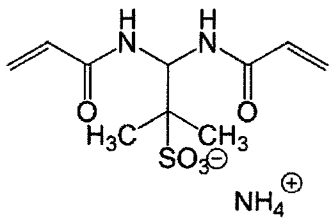

CL - 1

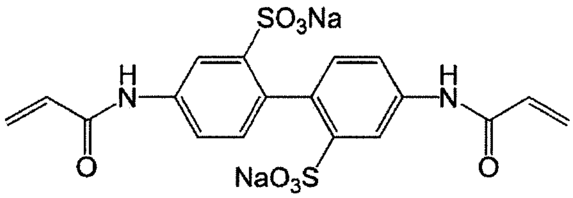

CL - 2

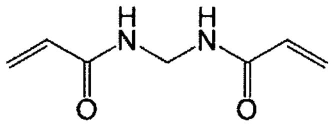

CL - 3

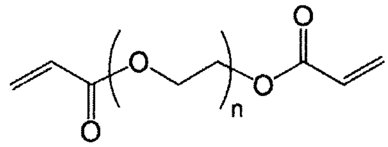

CL - 4

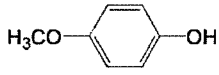

MEHQ

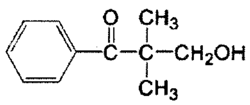

Darocur 1173

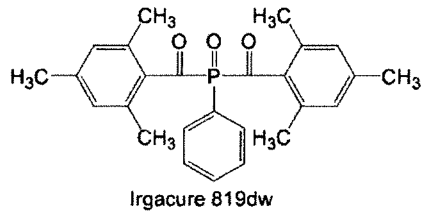

Irgacure 819dw

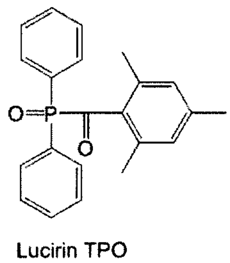

Lucirin TPO

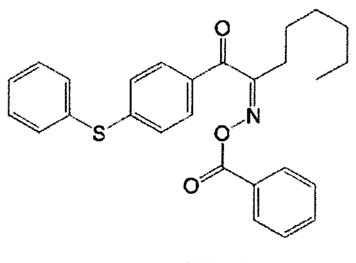

Irgacure OXE01

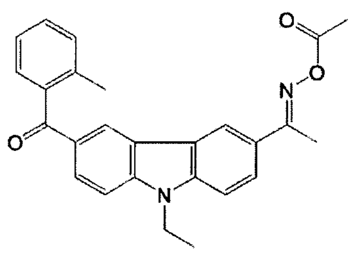

Irgacure OXE02

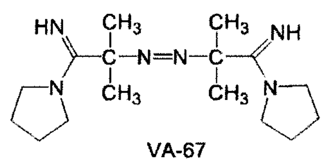

2HCl

VA-67

IPA: isopropyl alcohol (manufactured by Wako Pure Chemical Industries, Ltd.)

NMP: N-methyl-2-pyrrolidone (manufactured by Wako Pure Chemical Industries, Ltd.)

Explanation of References

1: membrane
2: arrow showing the state where water in feed solution permeates draw solution through membrane
3: flow channel of feed solution
4: flow channel of draw solution
5: movement direction of liquid
10: flow channel of water permeability measurement device

## Claims

**1.** A composition for forming a functional polymer membrane, comprising:

a monomer, which has an anionic functional group with an acid dissociation constant pKa of a, as a component A;
a monomer, which has an anionic functional group with an acid dissociation constant pKa of b greater than a, as a component B; and
a photopolymerization initiator represented by the following Formula PI-1 or PI-2 as a component C,
wherein the acid dissociation constants of the anionic functional groups of the components A and B are calculated in accordance with the conditions and using the software as described in the description,
a difference between b and a is equal to or greater than 1.5 and equal to or less than 10,
a ratio between a molar equivalent of the anionic functional group the component A has and a molar equivalent of the anionic functional group the component B has is 90:10 to 50:50,

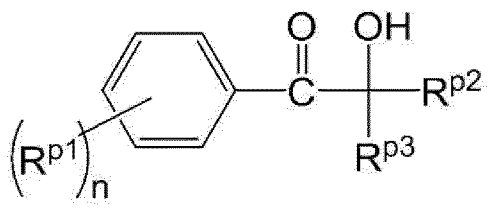

( PI - 1 )

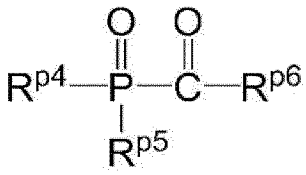

( PI - 2 )

in Formula PI-1, $R^{p1}$ represents an alkyl group, an alkenyl group, an alkoxy group, or an aryloxy group,

$R^{p2}$ and $R^{p3}$ each independently represent a hydrogen atom, an alkyl group, an alkenyl group, an alkoxy group, or an aryloxy group,
$R^{p2}$ and $R^{p3}$ may form a ring by being bonded to each other, and
n represents an integer of 0 to 5,

in Formula PI-2, $R^{p4}$ represents an alkyl group, an aryl group, an alkylthio group, or an arylthio group,

$R^{p5}$ represents an alkyl group, an aryl group, an alkylthio group, an arylthio group, or an acyl group, and
$R^{p6}$ represents an alkyl group or an aryl group,
wherein the component A is a monomer having at least one anionic functional group selected from the group consisting of a sulfonic acid group, a phosphonic acid group, and a phosphoric acid group, and
the component B is a monomer having a carboxylic acid group.

**2.** The composition for forming a functional polymer membrane according to claim 1,
wherein the component A has a (meth)acrylamide group and/or a (meth)acryloyloxy group.

**3.** The composition for forming a functional polymer membrane according to claim 1 or 2,
wherein the component B has a (meth)acrylamide group and/or a (meth)acryloyloxy group.

**4.** The composition for forming a functional polymer membrane according to any one of claims 1 to 3,

wherein the component A contains a monomer represented by the following Formula I and/or a monomer represented by the following Formula II,

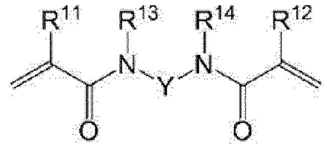

(I)

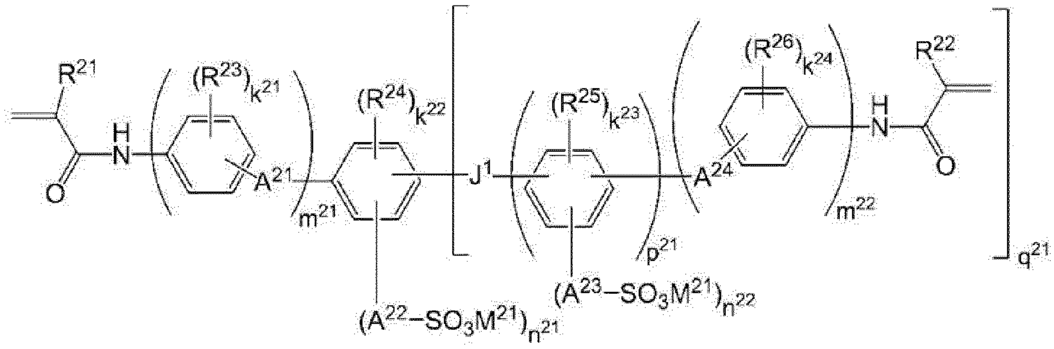

(II)

in Formula I, $R^{11}$ and $R^{12}$ each independently represent a hydrogen atom or a methyl group,

$R^{13}$ and $R^{14}$ each independently represent a hydrogen atom or an alkyl group, $R^{13}$ and $R^{14}$ may form a 6- or 7-membered ring together with nitrogen atoms, to which $R^{13}$ and $R^{14}$ are bonded, and Y, and
Y represents an alkylene group or an arylene group and contains 1 to 4 sulfonic acid groups,

in Formula II, $R^{21}$ and $R^{22}$ each independently represent a hydrogen atom or an alkyl group,

$R^{23}$, $R^{24}$, $R^{25}$, and $R^{26}$ each independently represent a substituent,
$k^{21}$, $k^{22}$, $k^{23}$, and $k^{24}$ each independently represent an integer of 0 to 4,
in a case where there is a plurality of $R^{23}$'s, $R^{24}$'s, $R^{25}$'s, and $R^{26}$'s, the plurality of $R^{23}$'s, $R^{24}$'s, $R^{25}$'s, and $R^{26}$'s may be the same as or different from each other and may form a ring by being bonded to each other,
$A^{21}$, $A^{22}$, $A^{23}$, and $A^{24}$ each independently represent a single bond or a divalent linking group,
$M^{21}$ each independently represents a hydrogen ion, an organic base ion, or a metal ion,
$n^{21}$ and $n^{22}$ each independently represent an integer of 1 to 4,
$m^{21}$ and $m^{22}$ each independently represent 0 or 1,
$J^1$ represents a single bond, -O-, -S-, $-SO_2-$, -CO-, $-CR^{28}R^{29}-$, or an alkenylene group,
$R^{28}$ and $R^{29}$ each independently represent a hydrogen atom, an alkyl group, or a halogen atom,
$p^{21}$ represents an integer of equal to or greater than 1, and
$q^{21}$ represents an integer of 0 to 4.

**5.** The composition for forming a functional polymer membrane according to any one of claims 1 to 4,

wherein when a polymer is formed, a main chain-anionic functional group distance of the component A is different from a main chain-anionic functional group distance of the component B,
the main chain-anionic functional group distance means the number of atoms from the main chain of the polymer formed to the anionic functional group, and
a difference between the main chain-anionic functional group distance of the component A and the main chain-anionic functional group distance of the component B is equal to or greater than 4.

**6.** A functional polymer membrane obtained by polymerizing the composition for forming a functional polymer membrane according to any one of claims 1 to 5.

**7.** The functional polymer membrane according to claim 6 that is an ion-exchange membrane.

**8.** A method for manufacturing the functional polymer membrane according to claim 6 or 7, comprising:

a step of polymerizing the composition for forming a functional polymer membrane by energy ray irradiation.

9. A separation membrane module comprising: the functional polymer membrane according to claim 7.

10. An ion exchange device comprising: the functional polymer membrane according to claim 7.

## Patentansprüche

1. Zusammensetzung zur Bildung einer funktionellen Polymermembran, enthaltend:

ein Monomer, das eine anionische funktionelle Gruppe mit einer Säuredissoziationskonstante pKa von a hat, als Komponente A,
ein Monomer, das eine anionische funktionelle Gruppe mit einer Säuredissoziationskonstante pKa von b hat, die größer ist als a, als Komponente B und
einen Fotopolymerisationsinitiator mit der folgenden Formel PI-1 oder PI-2 als Komponente C,
worin die Säuredissoziationskonstanten der funktionellen anionischen Gruppen der Komponenten A und B entsprechend den Bedingungen und unter Verwendung der Software berechnet werden, wie sie in der Beschreibung beschrieben sind,
ein Unterschied zwischen b und a gleich oder größer als 1,5 und gleich oder weniger als 10 ist,
ein Verhältnis zwischen einem molaren Äquivalent der anionischen funktionellen Gruppe, das die Komponente A hat, und einem molaren Äquivalent der anionischen funktionellen Gruppe, das die Komponente B hat, 90:10 bis 50:50 ist,

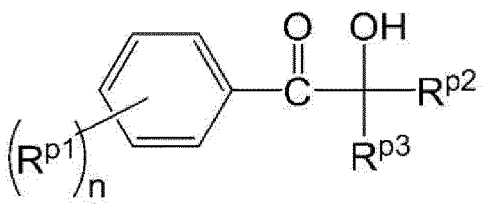
(PI - 1)

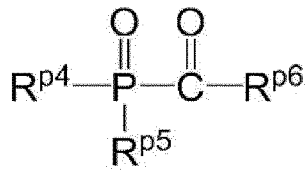
(PI - 2)

worin in der Formel PI-1 $R^{p1}$ eine Alkylgruppe, Alkenylgruppe, Alkoxygruppe oder Aryloxygruppe ist,

$R^{p2}$ und $R^{p3}$ jeweils unabhängig ein Wasserstoffatom, eine Alkylgruppe, Alkenylgruppe, Alkoxygruppe oder Aryloxygruppe sind,
$R^{p2}$ und $R^{p3}$ einen Ring durch Bindung aneinander bilden können und
n eine ganze Zahl von 0 bis 5 ist,

in der Formel PI-2 $R^{p4}$ eine Alkylgruppe, Arylgruppe, Alkylthiogruppe oder Arylthiogruppe ist,

$R^{p5}$ eine Alkylgruppe, Arylgruppe, Alkylthiogruppe, Arylthiogruppe oder Acylgruppe ist und
$R^{p6}$ eine Alkylgruppe oder Arylgruppe ist,
worin die Komponente A ein Monomer mit zumindest einer anionischen funktionellen Gruppe ist, ausgewählt aus der Gruppe, bestehend aus einer Sulfonsäuregruppe, einer Phosphonsäuregruppe und Phosphorsäuregruppe und
die Komponente B ein Monomer mit einer Carbonsäuregruppe ist.

2. Zusammensetzung zur Bildung einer funktionellen Polymermembran gemäß Anspruch 1, worin die Komponente A eine (Meth)acrylamidgruppe und/oder (Meth)acryloxyloxygruppe hat.

3. Zusammensetzung zur Bildung einer funktionellen Polymermembran gemäß Anspruch 1 oder 2, worin die Komponente B eine (Meth)acrylamidgruppe und/oder (Meth)acryloyloxygruppe hat.

4. Zusammensetzung zur Bildung einer funktionellen Polymermembran gemäß einem der Ansprüche 1 bis 3, worin die Komponente A ein Monomer mit der folgenden Formel I und/oder ein Monomer mit der folgenden Formel II enthält,

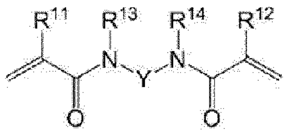
(I)

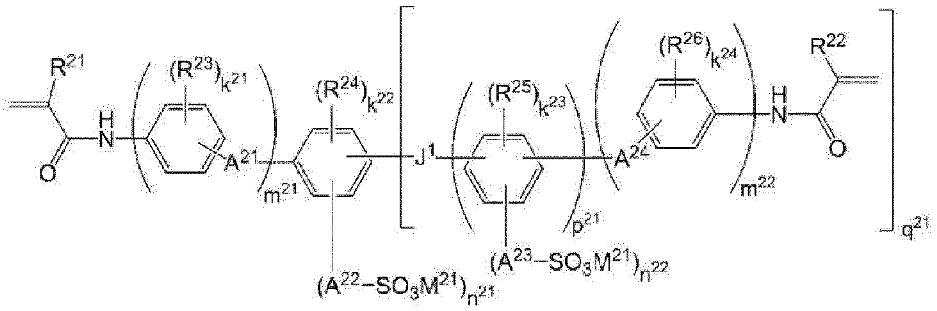
(II)

worin in der Formel I $R^{11}$ und $R^{12}$ jeweils unabhängig ein Wasserstoffatom oder eine Methylgruppe sind,

$R^{13}$ und $R^{14}$ jeweils unabhängig ein Wasserstoffatom oder eine Alkylgruppe sind,
$R^{13}$ und $R^{14}$ einen 6- oder 7-gliedrigen Ring zusammen mit Stickstoffatomen, an die $R^{13}$ und $R^{14}$ gebunden sind, und Y bilden können und
Y eine Alkylengruppe oder Arylengruppe ist und 1 bis 4 Sulfonsäuregruppen enthält,

in der Formel II $R^{21}$ und $R^{22}$ jeweils unabhängig ein Wasserstoffatom oder eine Alkylgruppe sind,

$R^{23}$, $R^{24}$, $R^{25}$ und $R^{26}$ jeweils unabhängig ein Substituent sind,
$k^{21}$, $k^{22}$, $k^{23}$ und $k^{24}$ jeweils unabhängig eine ganze Zahl von 0 bis 4 sind,
wenn es eine Vielzahl von Gruppen $R^{23}$, $R^{24}$, $R^{25}$ und $R^{26}$ gibt, die Vielzahl von $R^{23}$, $R^{24}$, $R^{25}$ und $R^{26}$ gleich oder verschieden voneinander sein können und einen Ring durch Bindung aneinander bilden können,
$A^{21}$, $A^{22}$, $A^{23}$ und $A^{24}$ jeweils unabhängig eine Einfachbindung oder bivalente Bindegruppe sind,
$M^{21}$ jeweils unabhängig ein Wasserstoffion, organisches Basenion oder Metallion ist,
$n^{21}$ und $n^{22}$ jeweils unabhängig eine ganze Zahl von 1 bis 4 sind,
$m^{21}$ und $m^{22}$ jeweils unabhängig 0 oder 1 sind,
$J^1$ eine Einfachbindung, -O-, -S-, $-SO_2-$, -CO-, $-CR^{28}R^{29}-$ oder eine Alkenylengruppe ist,
$R^{28}$ und $R^{29}$ jeweils unabhängig ein Wasserstoffatom, eine Alkylgruppe oder ein Halogenatom sind,
$p^{21}$ eine ganze Zahl von gleich oder größer als 1 ist und
$q^{21}$ eine ganze Zahl von 0 bis 4 ist.

5. Zusammensetzung zur Bildung einer funktionellen Polymermembran gemäß einem der Ansprüche 1 bis 4, worin dann, wenn ein Polymer gebildet ist, ein Abstand von Hauptgruppe-anionischer funktioneller Gruppe der Komponente A verschieden ist von einem Abstand der Hauptkette-anionischen funktionellen Gruppe der Komponente B, der Abstand von Hauptkette-anionischer funktioneller Gruppe die Zahl von Atomen der Hauptkette des gebildeten Polymers zu der funktionellen anionischen Gruppe bedeutet, und
ein Unterschied zwischen dem Abstand der Hauptkette-anionischen funktionellen Gruppe der Komponente A und dem Abstand der Hauptkette-anionischer funktioneller Gruppe der Komponente B gleich oder größer als 4 ist.

6. Funktionelle Polymermembran, erhalten durch Polymerisieren der Zusammensetzung zur Bildung einer funktionellen Polymermembran gemäß einem der Ansprüche 1 bis 5.

7. Funktionelle Polymermembran gemäß Anspruch 6, die eine Ionenaustauschmembran ist.

8. Verfahren zur Erzeugung der funktionellen Polymermembran gemäß Anspruch 6 oder 7, enthaltend:
einen Schritt der Polymerisation der Zusammensetzung zur Bildung einer funktionellen Polymermembran durch

Energiestrahl-Bestrahlung.

**9.** Separationsmembranmodul, enthaltend die funktionelle Polymermembran gemäß Anspruch 7.

**10.** Ionenaustauschvorrichtung, enthaltend die funktionelle Polymermembran gemäß Anspruch 7.

**Revendications**

**1.** Composition pour former une membrane de polymère fonctionnelle, comprenant :

un monomère, qui a un groupe fonctionnel anionique avec une constante de dissociation acide pKa de a, en tant que composant A ;
un monomère, qui a un groupe fonctionnel anionique avec une constante de dissociation acide pKa de b supérieure à a, en tant que composant B ;et
un initiateur de photopolymérisation représenté par la Formule PI-1 ou PI-2 suivante en tant que composant C ;
dans laquelle les constantes de dissociation acide des groupes fonctionnels anioniques des composants A et B sont calculées en accordance avec les conditions et en utilisant le logiciel tels que décrits dans la description, une différence entre b et a est égale à ou supérieure à 1,5 et égale à ou inférieure à 10,
un rapport entre un équivalent molaire du groupe fonctionnel anionique que le composant A a et un équivalent molaire du groupe fonctionnel anionique que le composant B a est 90:10 à 50:50,

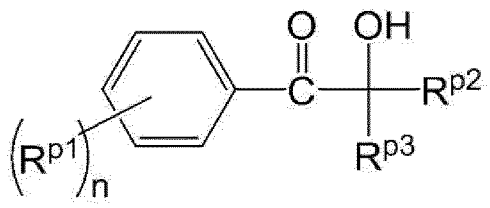

(PI - 1)

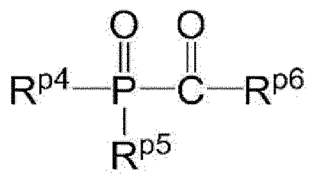

(PI - 2)

dans la Formule PI-1, $R^{p1}$ représente un groupe alkyle, un groupe alcényle, un groupe alkoxy, ou un groupe aryloxy,

$R^{p2}$ et $R^{p3}$ représentent chacun indépendamment un atome d'hydrogène, un groupe alkyle, un groupe alcényle, un groupe alkoxy, ou un groupe aryloxy,
$R^{p2}$ et $R^{p3}$ peuvent former un cycle en étant liés l'un à l'autre, et
n représente un entier de 0 à 5,

dans la Formule PI-2, $R^{p4}$ représente un groupe alkyle, un groupe aryle, un groupe alkylthio, ou un groupe arylthio,

$R^{p5}$ représente un groupe alkyle, un groupe aryle, un groupe alkylthio, un groupe arylthio, ou un groupe acyle, et
$R^{p6}$ représente un groupe alkyle ou un groupe aryle,
dans laquelle le composant A est un monomère ayant au moins un groupe fonctionnel anionique choisi parmi le groupe constitué d'un groupe acide sulfonique, un groupe acide phosphonique, et un groupe acide phosphorique, et
le composant B est un monomère ayant un groupe acide carboxylique.

**2.** La composition pour former une membrane de polymère fonctionnelle selon la revendication 1,
dans laquelle le composant A a un groupe (méth)acrylamide group et/ou un groupe (méth)acryloyloxy.

**3.** La composition pour former une membrane de polymère fonctionnelle selon la revendication 1 ou 2,
dans laquelle le composant B a un groupe (méth)acrylamide group et/ou un groupe (méth)acryloyloxy.

**4.** La composition pour former une membrane de polymère fonctionnelle selon l'une quelconque des revendications

1 à 3,

dans laquelle le composant A contient un monomère représenté par la Formule I suivante et/ou un monomère représenté par la Formule II suivante,

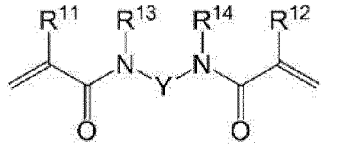

(I)

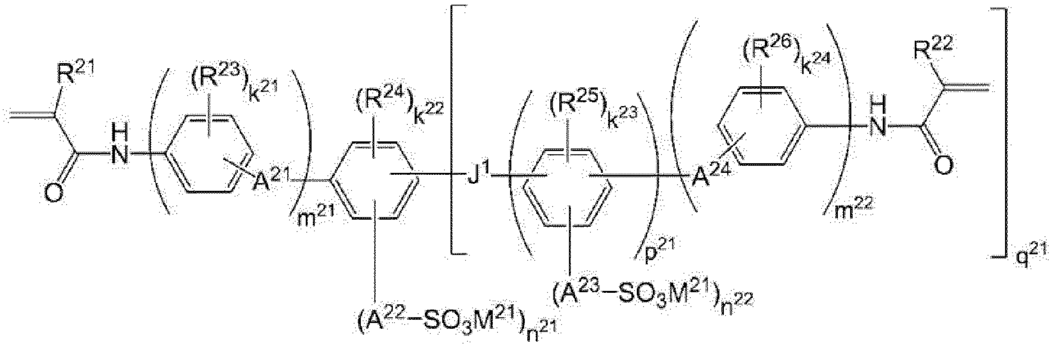

(II)

dans la Formule I, $R^{11}$ et $R^{12}$ représentent chacun indépendamment un atome d'hydrogène ou un groupe méthyle,

$R^{13}$ et $R^{14}$ représentent chacun indépendamment un atome d'hydrogène ou un groupe alkyle,
$R^{13}$ et $R^{14}$ peuvent former un cycle à 6 ou 7 chaînons ensemble avec des atomes d'azote, auxquels $R^{13}$ et $R^{14}$ sont liés, et Y, et
Y représente un groupe alcylène ou un groupe arylène et contient de 1 à 4 groupes acide sulfonique,

dans la Formule II, $R^{21}$ et $R^{22}$ représentent chacun indépendamment un atome d'hydrogène ou un groupe alkyle,

$R^{23}$, $R^{24}$, $R^{25}$, et $R^{26}$ représentent chacun indépendamment un substituant,
$k^{21}$, $k^{22}$, $k^{23}$, et $k^{24}$ représentent chacun indépendamment un entier de 0 à 4,
dans un cas où il y a une pluralité de $R^{23}$s, $R^{24}$s, $R^{25}$s, et $R^{26}$s, la pluralité de $R^{23}$s, $R^{24}$s, $R^{25}$s, et $R^{26}$s peuvent être identiques ou différents les uns par rapport aux autres et peuvent former un cycle en étant liés les uns aux autres,
$A^{21}$, $A^{22}$, $A^{23}$, et $A^{24}$ représentent chacun indépendamment une liaison simple ou un groupe de liaison divalent,
$M^{21}$ représente chacun indépendamment un ion hydrogène, un ion de base organique, ou un ion métallique,
$n^{21}$ et $n^{22}$ représentent chacun indépendamment un entier de 1 à 4,
$m^{21}$ et $m^{22}$ représentent chacun indépendamment 0 ou 1,
$J^1$ représente une liaison simple, -O-, -S-, $-SO_2-$, -CO-, $-CR^{28}R^{29}-$, ou un groupe alcénylène,
$R^{28}$ et $R^{29}$ représentent chacun indépendamment un atome d'hydrogène, un groupe alkyle, ou un atome d'halogène,
$p^{21}$ représente un entier égal à ou supérieur à 1, et
$q^{21}$ représente un entier de 0 à 4.

**5.** La composition pour former une membrane de polymère fonctionnelle selon l'une quelconque des revendications 1 à 4,

dans laquelle lorsqu'un polymère est formé, une distance groupe fonctionnel anionique-chaîne principale du composant A est différente d'une distance groupe fonctionnel anionique-chaîne principale du composant B,
la distance groupe fonctionnel anionique-chaîne principale signifie le nombre d'atomes de la chaîne principale du polymère formé au groupe fonctionnel anionique, et
une différence entre la distance groupe fonctionnel anionique-chaîne principale du composant A et la distance groupe fonctionnel anionique-chaîne principale du composant B est égale à ou supérieure à 4.

**6.** Membrane de polymère fonctionnelle obtenue en polymérisant la composition pour former une membrane de polymère fonctionnelle selon l'une quelconque des revendications 1 à 5.

7. La membrane de polymère fonctionnelle selon la revendication 6 qui est une membrane d'échange d'ions.

8. Procédé de fabrication de la membrane de polymère fonctionnelle selon la revendication 6 ou 7, comprenant : une étape de polymérisation de la composition pour former la membrane de polymère fonctionnelle par irradiation avec un rayon d'énergie.

9. Module de membrane de séparation comprenant : la membrane de polymère fonctionnelle selon la revendication 7.

10. Dispositif d'échange d'ions comprenant : la membrane de polymère fonctionnelle selon la revendication 7.

FIG. 1

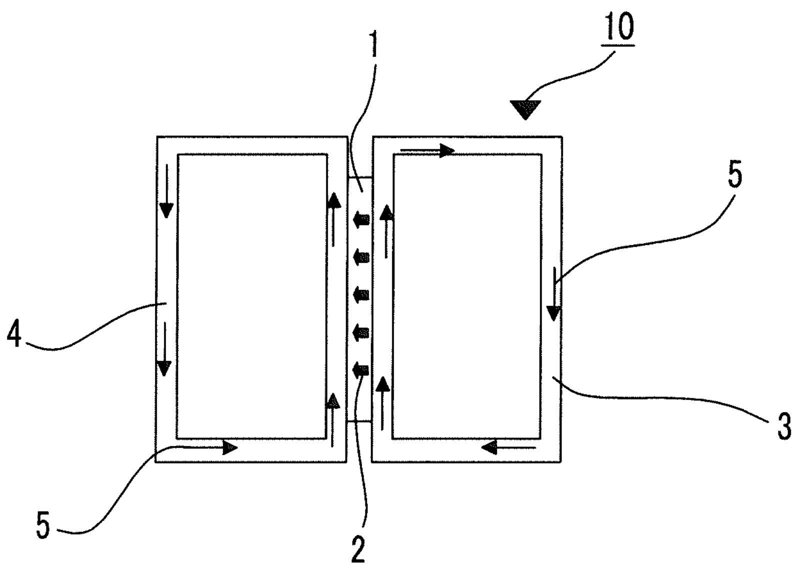

FIG. 2A

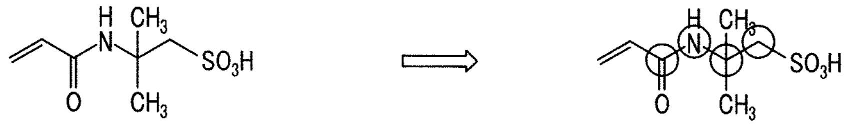

MN-1

MAIN CHAIN-ANIONIC
FUNCTIONAL GROUP DISTANCE : 4

FIG. 2B

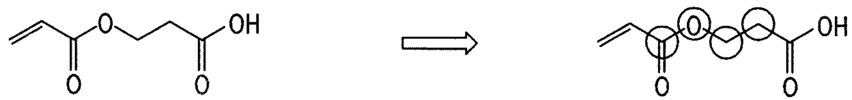

MN-2

MAIN CHAIN-ANIONIC
FUNCTIONAL GROUP DISTANCE : 4

FIG. 2C

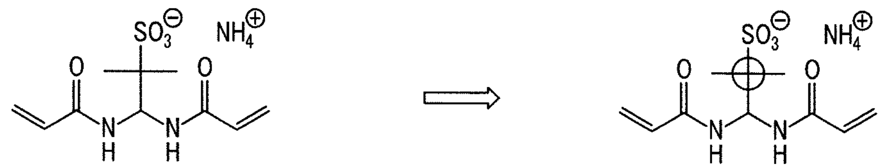

CL-1

MAIN CHAIN-ANIONIC
FUNCTIONAL GROUP DISTANCE : 1

FIG. 2D

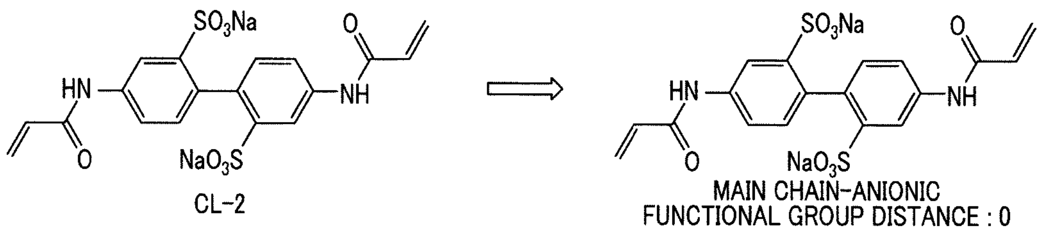

CL-2

MAIN CHAIN-ANIONIC
FUNCTIONAL GROUP DISTANCE : 0

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2000119420 A
- JP 2003082129 A
- US 20080216942 A
- JP 2008208190 A
- JP 2008266561 A
- JP 47006416 B
- JP S476416 B
- JP 47003981 B
- JP S473981 B
- JP 47022326 B
- JP S4722326 B
- JP 47023664 B
- JP S4723664 B
- JP 57030704 A
- JP S5730704 A
- JP 60026483 B
- JP S6026483 B
- JP 60026403 B
- JP S6026403 B
- JP 62081345 A
- JP S6281345 A
- JP 1034242 B
- JP H0134242 B
- US 4318791 A
- EP 0284561 A1
- JP 2211452 A
- JP H02211452 A
- JP 61194062 A
- JP S61194062 A
- JP 2009597 B
- JP H029597 B
- JP 63061950 B
- JP 59042864 B
- JP 2008105379 A
- JP 2009114290 A
- JP 196920189 B
- JP S4420189 B
- JP 51082102 A
- JP S5182102 A
- JP 52134692 A
- JP S52134692 A
- JP 59138205 A
- JP S59138205 A
- JP 60084305 A
- JP S6084305 A
- JP 62018537 A
- JP S6218537 A
- JP 1033104 A
- JP S6433104 A
- JP 53000702 A
- JP S53702 A
- JP 55500806 B
- JP S55500806 B
- JP 5142772 A
- JP H05142772 A
- JP 56075643 A
- JP S5675643 A
- JP 48042965 B
- JP S4842965 B
- JP 55034414 B
- JP S5534414 B
- JP 6308727 A
- JP H06308727 A
- JP 6250387 A
- JP H06250387 A
- JP 8065779 A
- JP H0865779 A
- US 4034001 A


### Non-patent literature cited in the description


- The Synthesis of Organic Compound (II-1). The Course of Experimental Science 16. The Chemical Society of Japan
- Polymer Chemistry. The Course of Experimental Science. vol. 26
- *RADIATION CURING IN POLYMER SCIENCE AND TECHNOLOGY,* 1993, 77-117
- **KIYOMI KATO.** Ultraviolet Curing System. United Engineering Center, 1989, 65-148
- **M. R. SANDER et al.** *Journal of Polymer Society,* 1972, vol. 10, 3173